# EUROPEAN PATENT APPLICATION

(11) **EP 4 548 738 A1**
(43) Date of publication of application: **07.05.2025**
(21) Application number: 23831110.4
(22) Date of filing: 15.06.2023
(51) Int. Cl.: A01B 69/00, G05D 1/20

(54) **ASSISTANCE SYSTEM FOR AGRICULTURAL MACHINE**

(30) Priority: 28.06.2022 JP 2022103749
(71) Applicant: KUBOTA CORPORATION, Osaka-shi, Osaka 556-8601 (JP)
(72) Inventor: NISHIKAWA, Takeshi, Sakai-shi, Osaka 590-0908 (JP)
(74) Representative: Cabinet Beau de Loménie
(86) International application number: PCT/JP2023/022174
(87) International publication number: WO 2024/004662

(57) **Abstract**

An operator can easily monitor an agricultural machine (1). A support system (S) for the agricultural machine (1) includes a plurality of sensors (61) to sense a vicinity of the agricultural machine (1) and a display (70) to display, as a first image (M1), an image that is among a plurality of images generated from data sensed by the plurality of sensors (61) and that shows a forward or rearward view of the agricultural machine (1). When the agricultural machine (1) is located in an area (E) related to agricultural work, the display (70) displays a predetermined image among the plurality of images as a second image (M2) preferentially over the first image (M1). The area (E) is a region (Ed) in the vicinity of an entry/exit (D) to an agricultural field (G), and when the agricultural machine (1) is located in the vicinity of the entry/exit (D), the display (70) displays, as the second image (M2), an image that is among the plurality of images and that shows the direction with a shorter distance between the agricultural machine (1) and the entry/exit (D).

## Description

### Technical Field

The present invention relates to a support system for an agricultural machine.

### Background Art

The automatic traveling system in the related art disclosed in PTL 1 includes an automatic traveling controller to cause a working vehicle to travel along a traveling path and a display controller to display a predetermined image on a display unit. The display controller displays, on the display unit, a traveling path image showing the traveling path, a vehicle body position image showing the position of the working vehicle identified using a positioning satellite system, and an overhead image around the working vehicle generated based on images of the surroundings of the working vehicle captured by a camera in a superimposed manner.

### Citation List

### Patent Literature

PTL 1: Japanese Unexamined Patent Application Publication No. 2019-32682

### Summary of Invention

### Technical Problem

The automatic traveling system in PTL 1 displays an image in the vicinity of the working vehicle as an overhead image, and thus can reduce an operator's monitoring workload for the vicinity of the working vehicle.

Although enlarged display and reduced display are possible with the overhead image, it is simply a top-down image of the vicinity of a machine body, thus an operator cannot know on which part of the overhead image attention should be paid, and the overhead image is not necessarily highly recognizable.

The present invention has been devised to solve such a problem in the related art, and it is an object to provide a support system for an agricultural machine, capable of easily monitoring the agricultural machine.

### Solution to Problem

A support system for an agricultural machine according to an aspect of the present invention includes a plurality of sensors to sense a vicinity of an agricultural machine, and a display to display, as a first image, an image that is among a plurality of images generated from data sensed by the plurality of sensors and that shows a forward or rearward view of the agricultural machine. When the agricultural machine is located in an area related to agricultural work, the display displays a predetermined image among the plurality of images as a second image preferentially over the first image.

The area is a region in a vicinity of an entry/exit to an agricultural field, and when the agricultural machine is located in the vicinity of the entry/exit, the display may display, as the second image, an image that is among the plurality of images and that shows a direction with a shorter distance between the agricultural machine and the entry/exit.

The area is a storage place for a working device, and when the agricultural machine is located in the storage place and the working device is to be coupled to the agricultural machine, the display may display, as the second image, an image that is among the plurality of images and that shows a direction of the working device.

The area is a work site where a working device coupled to the agricultural machine performs work, and when the agricultural machine is located in the work site and a travelling speed of the agricultural machine is less than a predetermined speed, the display may display, as the second image, an image that is among the plurality of images and that shows a direction of the working device.

When the agricultural machine is located in the area and approaching a predetermined position in the area, the display may display, as the second image, an image that is among the plurality of images and that shows a direction of the predetermined position.

The plurality of sensors may be provided in the agricultural machine to perform sensing in different directions from the agricultural machine.

The support system for an agricultural machine may further include a controller to automatically drive the agricultural machine, and the display may include an operating member that is connected to the controller and that controls the agricultural machine remotely via the controller.

The display may be provided in a vicinity of an operator's seat of the agricultural machine.

### Advantageous Effects of Invention

With the above-described support system for an agricultural machine, an operator can easily monitor the agricultural machine.

### Brief Description of Drawings

[FIG. 1] FIG. 1 is an overall view of a support system for an agricultural machine.
[FIG. 2] FIG. 2 is a perspective view of a coupler.
[FIG. 3A] FIG. 3A is a first view showing an example of a monitoring screen that displays a first image.
[FIG. 3B] FIG. 3B is a second view showing an example of a monitoring screen that displays a first image.
[FIG. 4A] FIG. 4A is a first view showing an example of a monitoring screen that displays a second image.
[FIG. 4B] FIG. 4B is a second view showing an example of a monitoring screen that displays a second image.
[FIG. 4C] FIG. 4C is a third view showing an example of a monitoring screen that displays a second image.
[FIG. 4D] FIG. 4D is a fourth view showing an example of a monitoring screen that displays a second image.
[FIG. 5] FIG. 5 is a first view for explaining a state in which an agricultural machine is located in a storage place, and a sensor corresponding to a second image displayed by a display.
[FIG. 6] FIG. 6 is a second view for explaining a state in which the agricultural machine is located in the storage place, and a sensor corresponding to a second image displayed by the display.
[FIG. 7] FIG. 7 is a first view for explaining a state in which the agricultural machine is located on a movement path, and a sensor corresponding to a second image displayed by the display.
[FIG. 8] FIG. 8 is a second view for explaining a state in which the agricultural machine is located on the movement path, and a sensor corresponding to a second image displayed by the display.
[FIG. 9] FIG. 9 is a first view for explaining a state in which the agricultural machine is located in the vicinity of an entry/exit to an agricultural field, and a sensor corresponding to a second image displayed by the display.
[FIG. 10] FIG. 10 is a second view for explaining a state in which the agricultural machine is located in the vicinity of the entry/exit to the agricultural field, and a sensor corresponding to a second image displayed by the display.
[FIG. 11] FIG. 11 is a third view for explaining a state in which the agricultural machine is located in the vicinity of the entry/exit to the agricultural field, and a sensor corresponding to a second image displayed by the display.
[FIG. 12] FIG. 12 is a view for explaining a series of flow related to display of a second image by the display.
[FIG. 13] FIG. 13 is a schematic side view illustrating the agricultural machine.
[FIG. 14] FIG. 14 is a schematic plan view illustrating the agricultural machine. Description of Embodiments

Hereinafter, an embodiment of the present invention will be described with reference to the drawings.

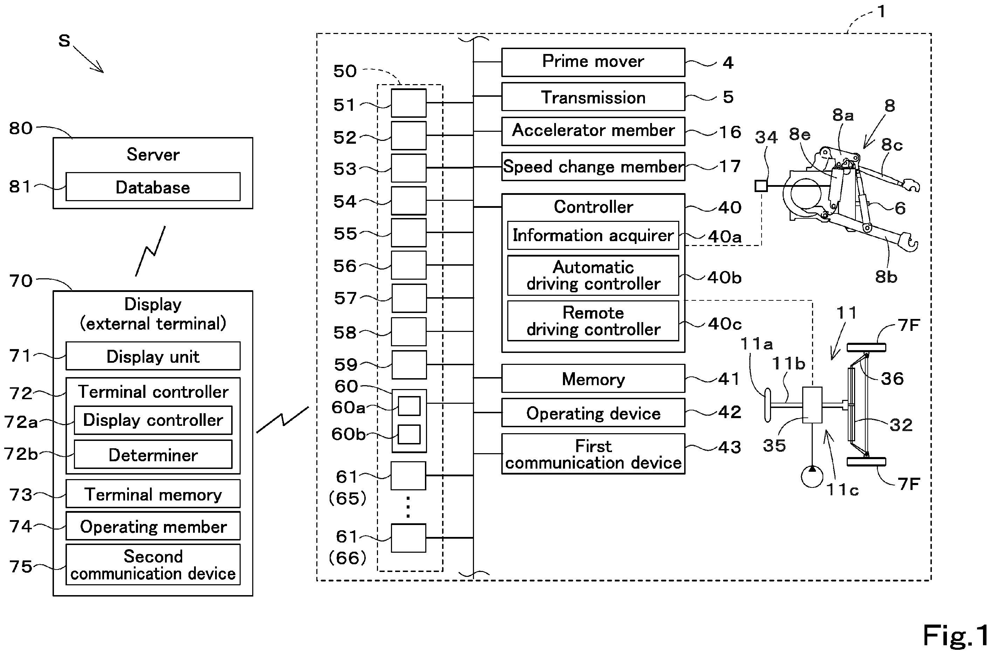

FIG. 1 illustrates an overall view of a support system S for an agricultural machine 1 in the present embodiment. The support system S for the agricultural machine 1 is a system that displays an image showing a forward or rearward view of the agricultural machine 1 and that displays an image showing the vicinity of the agricultural machine 1 according to the position of the agricultural machine 1. First, the agricultural machine 1 will be described in detail.

The agricultural machine 1 is a working machine that performs agricultural work, and is a tractor in the present embodiment. Note that the agricultural machine 1 may be a working machine that performs agricultural work, is not limited to a tractor, and thus may be a combine, a transplanter, or the like.

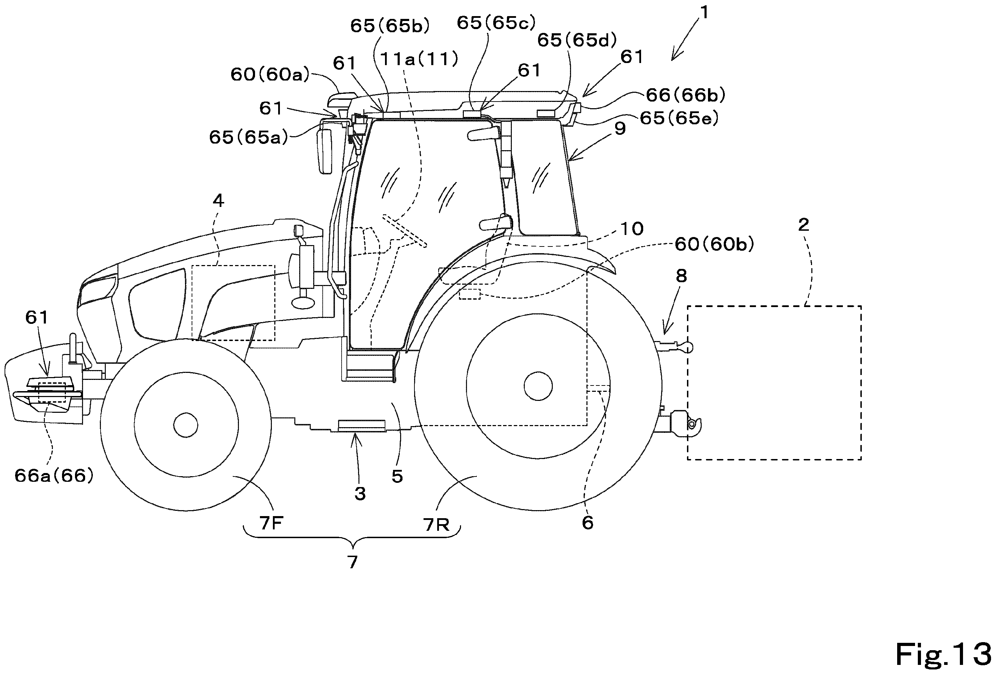

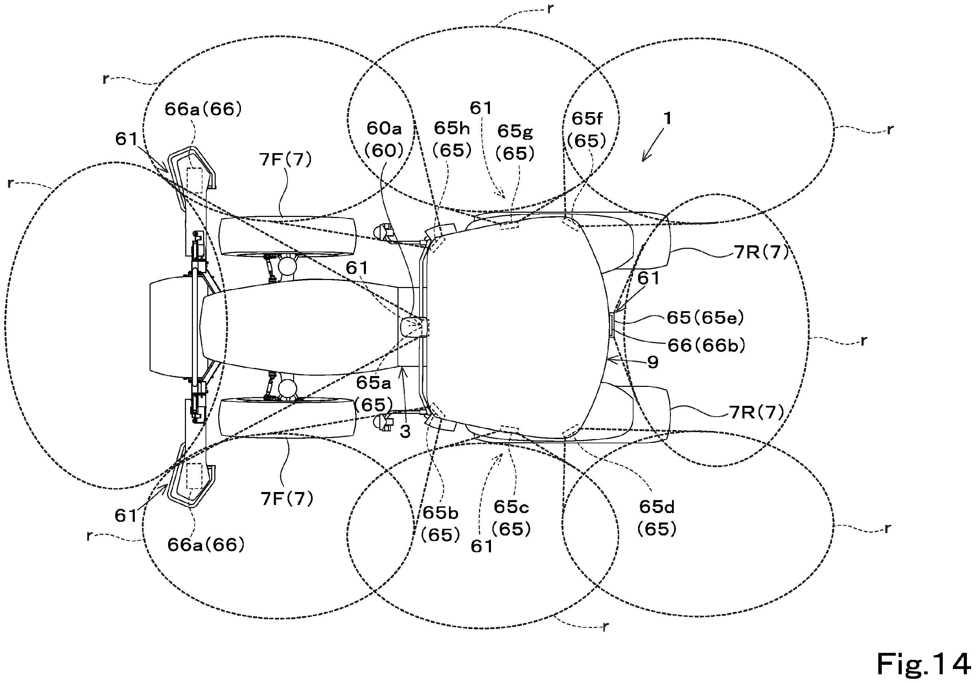

FIG. 13 is a schematic side view illustrating the agricultural machine 1. FIG. 14 is a schematic plan view illustrating the agricultural machine 1. In the description of the present embodiment, the direction (the left side of FIG. 13 and FIG. 14) in which an operator seated on an operator's seat 10 of the agricultural machine 1 faces is referred to as the forward direction, and the opposite direction (the right side of FIG. 13 and FIG. 14) is referred to as the rearward direction. The left side (the near side of FIG. 13 and the lower side of FIG. 14) of the operator is referred to as the leftward direction, and the right side (the far side of FIG. 13 and the upper side of FIG. 14) of the operator is referred to as the rightward direction. The horizontal direction perpendicular to the front-rear direction is referred to as the width direction.

As illustrated in FIG. 13 and FIG. 14, the agricultural machine 1 includes a traveling vehicle body 3 including a travelling device 7, a prime mover 4, and a transmission 5. The travelling device 7 is a wheeled travelling device in which front wheels 7F and rear wheels 7R are comprised of a tire. The front wheels 7F and the rear wheels 7R are each provided as a pair spaced away in the width direction. As another example, a travelling device may be used, in which the front wheels 7F and the rear wheels 7R are comprised of a crawler. The traveling vehicle body 3 can run forward and rearward by the drive of the travelling device 7.

The prime mover 4 is incorporated in a front portion of the traveling vehicle body 3. The prime mover 4 is comprised of e.g., a diesel engine. As another example, the prime mover 4 may be comprised of another internal combustion engine such as a gasoline engine, or an electric motor or the like.

The transmission 5 speed-changes a driving force output from the prime mover 4 by switching the speed stage, enabling a propelling force of the travelling device 7 to be switchable and a switching state (switching of the travelling device 7 to forward drive or rearward drive) of the travelling device 7 to be changeable. In addition, the transmission 5 transmits the power of the prime mover 4 to a PTO shaft 6. The PTO shaft 6 is an output shaft that drives the working device 2 by being connected to the working device 2.

A cabin 9 is provided at an upper portion of the traveling vehicle body 3. An operator's seat 10 is provided inside the cabin 9.

The working device 2 can be coupled to the agricultural machine 1. Specifically, a rear portion of the traveling vehicle body 3 is provided with a coupler 8, to and from which the working device 2 is attachable and detachable. The coupler 8 is comprised of a three-point linkage or the like. The agricultural machine 1 can tow the working device 2 by coupling the working device 2 to the coupler 8, and driving the travelling device 7. The working device 2 is, for example, a cultivator that performs cultivating work, a fertilizer spreader that spreads fertilizer, an agricultural chemical spreader that spreads agricultural chemicals, a harvester that harvests crops, a mower that mows grass or the like, a tedder that teds grass or the like, a rake that rakes grass or the like, a baler that bales grass or the like, or a separator that separates crops.

In the above-described embodiment, an example has been described in which the agricultural machine 1 is a tractor, and the working device 2 is coupled to the coupler 8. When the agricultural machine 1 is a combine, a rice planting machine, or the like, the working device 2 may be a device that is provided in the agricultural machine 1 to perform work. For example, when the agricultural machine 1 is a combine, the working device 2 includes a mower that mows grass or the like, and a threshing machine that performs threshing. When the agricultural machine 1 is a rice planting machine, the working device 2 includes a rice planter that performs rice planting.

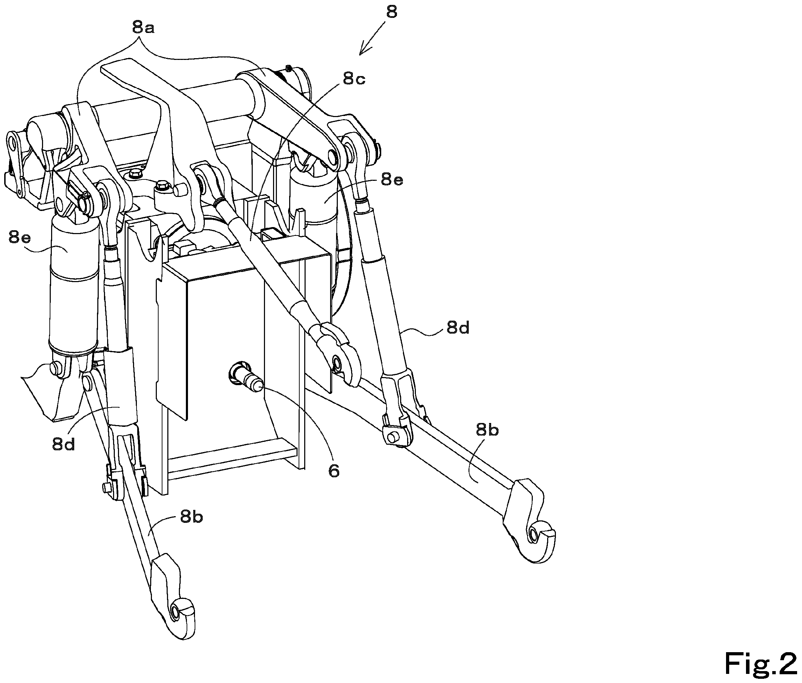

FIG. 2 is a perspective view of the coupler 8 as seen from the rear. The coupler 8 includes lift arms 8a, lower links 8b, a top link 8c, lift rods 8d, and lift cylinders 8e.

The front ends of the lift arms 8a are upward or downward swingably supported at a rear upper portion of a case (transmission case) that houses the transmission 5. The lift arms 8a are swung (raised/lowered) by the drive of the lift cylinders 8e. Each lift cylinder 8e is comprised of a hydraulic cylinder. As illustrated in FIG. 1, the lift cylinder 8e is connected to a hydraulic pump via control valve 34. The control valve 34 is a solenoid valve or the like, and expands and contracts the lift cylinder 8e.

As illustrated in FIG. 2, the front ends of the lower links 8b are upward or downward swingably supported at a rear lower portion of the transmission 5. The front end of the top link 8c is upward or downward swingably supported at a rear portion of the transmission 5 above the lower links 8b. The lift rods 8d connect the lift arms 8a and the lower links 8b. The rear of each lower link 8b and the rear of each top link 8c are formed in a hook shape.

When the lift cylinders 8e drive (expand and contract), the lift arms 8a are raised/lowered, and the lower links 8b coupled to the lift arms 8a via the lift rods 8d are raised/lowered. Thus, the working device 2 is swung (raised/lowered) upward or downward with a front portion of the lower link 8b as a fulcrum.

As illustrated in FIG. 1, the agricultural machine 1 includes a steering device 11. The steering device 11 includes: a handle (steering wheel) 11a; a rotational shaft (steering shaft) 11b that rotates along with the rotation of the handle 11a; and an assist mechanism (power steering mechanism) 11c that assists the steering of the handle 11a.

The assist mechanism 11c includes a control valve 35, and a steering cylinder 32. The control valve 35 is e.g., a three-way switching valve that is switchable by movement of a spool or the like. The control valve 35 is also switchable by steering of the steering shaft 11b. The steering cylinder 32 is connected to arms (knuckle arms) 36 that change the direction of the front wheels 7F. Thus, when rotation operation is performed on the handle 11a, the switching position and the opening of the control valve 35 are changed in response to the operation, the steering cylinder 32 expands and contracts to the left or the right depending on the switching position and the opening of the control valve 35, and thus the steering direction of the front wheels 7F can be changed. Note that the above-described steering device 11 is an example, and is not limited to the configuration described above.

As illustrated in FIG. 1, the support system S for the agricultural machine 1 includes a plurality of detectors 50. The plurality of detectors 50 are provided in the agricultural machine 1.

The plurality of detectors 50 include a plurality of sensors that detect the state of the agricultural machine 1. The plurality of detectors 50 include e.g., a water temperature sensor 51, a fuel sensor 52, a prime mover rotation sensor (rotation sensor) 53, an accelerator pedal sensor 54, a steering angle sensor 55, an angle sensor 56, a speed sensor 57, a PTO rotation sensor (rotation sensor) 58, a battery sensor 59, a position detector 60, and a plurality of sensors 61. In other words, in the present embodiment, the support system S for the agricultural machine 1 includes the water temperature sensor 51, the fuel sensor 52, the prime mover rotation sensor 53, the accelerator pedal sensor 54, the steering angle sensor 55, the angle sensor 56, the speed sensor 57, the PTO rotation sensor 58, the battery sensor 59, the position detector 60, and the plurality of sensors 61.

The water temperature sensor 51 is a sensor that detects the temperature (water temperature) of a coolant, and the fuel sensor 52 is a sensor that detects the remaining amount of fuel. The prime mover rotation sensor 53 is a sensor that detects the number of revolutions of the prime mover 4, and the accelerator pedal sensor 54 is a sensor that detects the amount of operation of an accelerator pedal 16. The steering angle sensor 55 is a sensor that detects the steering angle of the steering device 11, and the angle sensor 56 is a sensor that detects the angle of the lift arms 8a. The speed sensor 57 is a sensor that detects the traveling speed (vehicle speed) of the traveling vehicle body 3, and the PTO rotation sensor 58 is a sensor that detects the number of revolutions of the PTO shaft 6. The battery sensor 59 is a sensor that detects the voltage of a storage cell such as a battery. The position detector 60 is a sensor that detects the position of the agricultural machine 1 (traveling vehicle body 3), and the plurality of sensors 61 are devices that sense the vicinity of the agricultural machine 1.

Note that the sensors and the devices included in the plurality of detectors 50 are not limited to the above-mentioned sensors, and the combination and configuration thereof are not limited to the above-mentioned configuration.

The position detector 60 and the sensors 61 will be described in detail below.

The position detector 60 can detect the position (measured position information including the latitude and longitude) of itself by a satellite positioning system (positioning satellite) such as D-GPS, GPS, GLONASS, Hokuto, Galileo, or Michibiki. Specifically, the position detector 60 receives satellite signals (such as the position of a positioning satellite, transmission time, and correction information) transmitted from a positioning satellite, and detects the position (e.g., the latitude and longitude) of the agricultural machine 1, in other words, the vehicle body position (positional information) based on the satellite signals. Note that the positional information may include information related to the azimuth of the agricultural machine 1 in addition to information related to the position of the agricultural machine 1.

The position detector 60 includes a receiver 60a, and an inertial measurement unit (IMU) 60b. The receiver 60a is a device that has an antenna or the like to receive satellite signals transmitted from a positioning satellite, and is mounted on the traveling vehicle body 3 separately from the IMU 60b. In this embodiment, the receiver 60a is mounted on the traveling vehicle body 3, for example, on the cabin 9. Note that the mounting position of the receiver 60a is not limited to the cabin 9.

The IMU 60b includes an acceleration sensor that detects an acceleration and a gyroscope sensor that detects an angular speed. The IMU 60b is provided in the traveling vehicle body 3, for example, under the operator's seat 10, and can detect the roll angle, pitch angle, yaw angle, or the like of the traveling vehicle body 3.

The plurality of sensors 61 are devices that sense the vicinity of the agricultural machine 1. The plurality of sensors 61 generate data by sensing, from which images can be produced. The plurality of sensors 61 include an optical or sound wave sensor and a signal processing circuit. The optical sensor of the plurality of sensors 61 is comprised of e.g., an imaging device 65 such as a camera or a Light Detection And Ranging (LiDAR) 66.

The imaging device 65 is comprised of a CCD camera on which a CCD (Charge Coupled Devices) image sensor is mounted, a CMOS camera on which a CMOS (Complementary Metal Oxide Semiconductor) image sensor is mounted, or the like. The imaging device 65 captures an image of the imaging range (sensing range r) in the vicinity of the agricultural machine 1 to generate an image signal (data). The signal processing circuit detects the presence or absence of an object, the position of an object, the type of an object, and the like based on the image signal output from the imaging device 65.

The LiDAR (laser sensor) 66 emits pulse-shaped measurement light (laser beams) from a light source such as a laser diode several millions of times per second, performs scanning in a horizontal direction or a vertical direction by reflecting the measurement light on a rotating mirror, and then projects light into a predetermined detection range (sensing range r). The LiDAR 66 then receives, from an object, reflection light of the measurement light by a light receiving element. The signal processing circuit detects the presence or absence of an object, the position of an object, the type of an object, and the like based on the received light signal (data) output from the light receiving element of the LiDAR 66. In addition, the signal processing circuit detects the distance to an object based on the time from emission of the measurement light by the LiDAR 66 until the reflection light is received (TOF (Time of Flight) method).

The sound wave sensor of the plurality of sensors 61 is comprised of an airborne ultrasonic sensor such as a sonar. The airborne ultrasonic sensor transmits measurement waves (ultrasonic waves) to a predetermined detection range (sensing range r) by a wave transmitter, and receives reflection waves of the measurement waves by a wave receiver, the reflection waves being reflected on an object. The signal processing circuit detects the presence or absence of an object, the position of an object, the type of an object, and the like based on the signal (data) output from the wave receiver. In addition, the signal processing circuit detects the distance to an object based on the time from transmission of the measurement waves by the airborne ultrasonic sensor until the reflection waves are received (TOF (Time of Flight) method).

In the present embodiment, an example will be described below in which the plurality of sensors 61 include a plurality of imaging devices 65 and a plurality of LiDARs 66 as illustrated in FIG. 1.

As illustrated in FIG. 13 and FIG. 14, the plurality of sensors 61 are each mounted on the agricultural machine 1 so as to perform sensing (detection of an object) in different directions from the agricultural machine 1. It is preferable that the plurality of sensors 61 can perform sensing of the vicinity of the agricultural machine 1 for 360° in a horizontal direction. It is preferable that the plurality of sensors 61 can perform sensing of the vicinity of the agricultural machine 1 without a blind spot.

As illustrated in FIG. 13 and FIG. 14, the plurality of sensors 61 are mounted on the agricultural machine 1 so as to perform sensing in the forward, left forward, lateral leftward, left rearward, rearward, right rearward, lateral rightward, and right forward directions of the vicinity of the agricultural machine 1 (traveling vehicle body 3). Thus, the sensing direction (the direction of detection of an object) of the sensors 61 faces forward, left forward, lateral leftward, left rearward, rearward, right rearward, lateral rightward, and right forward of the agricultural machine 1, and the sensing range (detection range of an object) r spreads forward, left forward, lateral leftward, left rearward, rearward, right rearward, lateral rightward, and right forward of the agricultural machine 1 with a predetermined area.

Note that the objects detectable by the plurality of sensors 61 include an agricultural field G, crops from the agricultural field G, an entry/exit D to the agricultural field G, the ground, a road surface, other objects, an obstacle O, and a human.

For example, the plurality of imaging devices 65 are each mounted on the cabin 9. As illustrated in FIG. 14, a front portion, a left front portion, a left lateral portion, a left rear portion, a rear portion, a right rear portion, a right lateral portion, and a right front portion of an upper portion of the cabin 9 are each provided with one of the plurality of imaging devices 65. The plurality of imaging devices 65 are each mounted on an upper portion of the frame of the cabin 9 via a retaining member such as a bracket or a stay. Therefore, in the present embodiment, the plurality of sensors 61 include eight imaging devices 65.

As illustrated in FIG. 13 and FIG. 14, the plurality of LiDARs 66 are provided at the front and rear of the traveling vehicle body 3. Of the plurality of LiDARs 66, a pair of first LiDARs 66a provided at the front of the traveling vehicle body 3 to sense the forward area of the agricultural machine 1 is mounted on the traveling vehicle body 3 via a mounting structure. The pair of first LiDARs 66a is disposed at a position away from the traveling vehicle body 3 forward and outward in the vehicle width direction (left forward and right forward).

Of the plurality of LiDARs 66, a second LiDAR 66b provided at the rear of the traveling vehicle body 3 to sense the rearward area of the agricultural machine 1 is mounted on the rear of an upper portion of the frame of the cabin 9 via a retaining member such as a bracket or a stay. Therefore, in the present embodiment, the plurality of sensors 61 include three LiDARs 66.

Note that it is sufficient that the plurality of sensors 61 can sense the vicinity of the agricultural machine 1 and generate an image showing the vicinity of the agricultural machine 1 based on detected signals, and the components, the mounting positions, and the like of the plurality of sensors 61 are not limited to the configuration described above. For example, when the imaging range of the plurality of imaging devices 65 is relatively large, a front portion, a left lateral portion, a rear portion, and a right lateral portion of the cabin 9 may be each provided with a sensor 61 to enable sensing of the vicinity of the agricultural machine 1 for 360° in a horizontal direction.

When a blind spot occurs in the sensing range r to be sensed by the plurality of imaging devices 65 included in the plurality of sensors 61, the blind spot may be covered by another sensor 61 (for example, a LiDAR 66).

Thus, the plurality of sensors 61 may include all of the imaging devices 65, the LiDARs 66, and the airborne ultrasonic sensor, or may include at least one of those. In addition, detection means such as a sensor other than those may be included in the plurality of sensors 61. Furthermore, the imaging devices 65, the LiDARs 66, the airborne ultrasonic sensor, and other detection means may be combined as appropriate to form a plurality of sensors 61 which may be mounted on the agricultural machine 1.

As illustrated in FIG. 1, the agricultural machine 1 includes a controller 40, a memory 41, an operating device 42, and a first communication device 43. The controller 40 is a device that performs various control of the agricultural machine 1, and includes CPUs, and electrical and electronic circuits.

The memory 41 is a non-volatile memory or the like, and can store various programs and variety of information related to the agricultural machine 1.

The operating device 42 is a device that receives an operation of an operator. The operating device 42 is connected to the controller 40, and outputs an operation signal to the controller 40 in response to the operation of the operator. The operating device 42 includes an accelerator member (accelerator pedal or accelerator lever) 16 provided in the traveling vehicle body 3, and a speed change member (speed change lever or speed change switch) 17. For example, the controller 40 controls the traveling speed based on the operation signal input from the accelerator member 16. Specifically, the controller 40 controls the traveling speed based on the amount of operation of the accelerator member 16, and a control map pre-stored in the memory 41.

The first communication device 43 performs wireless communication with the later-described display 70 directly or indirectly by Wi-Fi (Wireless Fidelity, registered trademark), BLE (Bluetooth (registered trademark) Low Energy), LPWA (Low Power, Wide Area), LPWAN (Low-Power Wide-Area Network), or the like in IEEE802.11 series which is a communication standard. As another example, the first communication device 43 may be provided with a communication circuit that can communicate with the outside (such as the display 70 or server 80) wirelessly, for example, by a mobile phone communication network or a data communication network. The first communication device 43 transmits information (machine information) indicating the state of the agricultural machine 1 to the outside. The first communication device 43 transmits, as the machine information, e.g., detection signals detected by the plurality of detectors 50. Note that the first communication device 43 may transmit, as the machine information, information related to the control performed by the controller 40, or operation signals (e.g., operation signals of the speed change member 17) of the operating device 42.

As illustrated in FIG. 1, the support system S for the agricultural machine 1 includes the display 70. The display 70 is an external terminal operated by e.g., an operator who monitors the work of the agricultural machine 1, or an operator who operates the agricultural machine 1. The display (external terminal) 70 is a terminal such as a smartphone (multifunctional mobile phone), a tablet, or a PDA, or a fixed computer such as a personal computer. The display 70 includes a display unit (display screen) 71, a terminal controller 72, a terminal memory 73, an operating member 74, and a second communications device 75.

The display unit 71 can display a variety of images, and is able to display, as an image, e.g., the machine information transmitted from the first communication device 43.

The terminal controller 72 is a device that performs various control related to the display 70. The terminal controller 72 is comprised of electrical and electronic parts, programs, and the like. The terminal controller 72 includes a display controller 72a. The display controller 72a can display variety of information on the display unit 71 by controlling e.g., the display unit 71.

The terminal memory 73 is a non-volatile memory or the like, and can store various programs and variety of information related to the display 70. For example, the display controller 72a can generate a screen to be displayed on the display unit 71 based on the various programs, image data, and the like stored in the terminal memory 73.

The operating member 74 is an operation actuator that receives an operation of an operator. In the present embodiment, the operating member 74 is a display image that is displayed on the display unit 71 and can receive an operation. In this case, the operating member 74 receives input of information by a touch panel operated with a finger of an operator or the like. Note that the operating member 74 is not limited to a display image displayed on the display unit 71, and may include a push button switch or the like.

The second communication device 75 can communicate with the agricultural machine 1 (the first communication device 43). The second communication device 75 includes a wireless communication circuit for performing wireless communication. The wireless communication circuit performs wireless communication with the first communication device 43 directly or indirectly by Wi-Fi (Wireless Fidelity, registered trademark), BLE (Bluetooth (registered trademark) Low Energy), LPWA (Low Power, Wide Area), LPWAN (Low-Power Wide-Area Network), or the like in IEEE802.11 series which is a communication standard. As another example, the second communication device 75 may be provided with a communication circuit that can communicate with the outside wirelessly, for example, by a mobile phone communication network or a data communication network. The second communication device 75 may be able to communicate with not only the first communication device 43, but also the server 80. Thus, the second communication device 75 may be able to communicate with the first communication device 43 indirectly via the server 80 or the like.

Thus, the second communication device 75 can receive machine information from the first communication device 43. Thus, the display controller 72a can display the machine information as an image on the display unit 71 based on the various programs, image data, and the machine information stored in the terminal memory 73.

The agricultural machine 1 allows automatic driving, and can be controlled remotely by the display (external device) 70. As illustrated in FIG. 1, the support system S for the agricultural machine 1 includes an information acquirer 40a, an automatic driving controller 40b, and a remote driving controller 40c. In the present embodiment, the information acquirer 40a, the automatic driving controller 40b, and the remote driving controller 40c are included in the controller 40, and comprised of the electrical and electronic circuits provided in the controller 40 and the programs stored in CPUs and the like.

The information acquirer 40a can acquire agricultural field information. The agricultural field information includes information relating to the agricultural field G where the agricultural machine 1 performs agricultural work, the entry/exit D to the agricultural field G, a farm road Ra and a public road Rb in the vicinity of the agricultural field G, and information relating to road surfaces of those fields and roads. For example, the agricultural field information may be included in map information on an area including the agricultural field G, and the map information may be pre-stored in an external storage unit such as a storage in the server 80, or on the cloud, or the memory 41 provided in the agricultural machine 1. In the present embodiment, the map information is stored in a database 81 of the server 80.

The map information may be generated by another apparatus (such as the server 80) or a program on the cloud based on the travel trajectory when the agricultural machine 1 or other vehicles previously travelled over the agricultural field G and the vicinity of the agricultural field G, the results of sensing performed by the sensors 61 mounted on the agricultural machine 1 or other vehicles, airborne image data obtained when a drone has flown over the vicinity of the agricultural field G, or the like.

The automatic driving controller 40b controls the automatic driving of the agricultural machine 1. The automatic driving controller 40b can perform line automatic driving control and autonomous automatic driving control. In the line automatic driving control, the automatic driving controller 40b controls the operation of the steering device 11, the transmission 5, the prime mover 4, and the like so that the agricultural machine 1 (traveling vehicle body 3) moves along a pre-set travel schedule line.

In the autonomous automatic driving control, the automatic driving controller 40b sets the steering direction and the traveling speed (speed) of the traveling vehicle body 3, and the like based on the results of sensing (detection of an object) of the vicinity of the agricultural machine 1 (traveling vehicle body 3) performed by the sensors 61 and the like, and controls the operation of the steering device 11, the transmission 5, the prime mover 4, and the like so that the set steering and traveling speed are achieved.

Note that the line automatic driving control and the autonomous automatic driving control may be switchable by a switch or the like. The automatic driving controller 40b may be configured so that one of the line automatic driving control and the autonomous automatic driving control can be performed. The configuration of the automatic driving controller 40b is not limited to what has been described above.

The remote driving controller 40c controls the driving of the agricultural machine 1 by remote control. The remote driving controller 40c controls the operation of the steering device 11, the transmission 5, the prime mover 4, and the like so as to move the agricultural machine 1 (traveling vehicle body 3), based on the operation signal of the operating member 74 received from the display (external terminal) 70 connected to the agricultural machine 1. Thus, an operator can control the agricultural machine 1 remotely via the controller 40 by operating the operating member 74 of the display 70.

A description will be given below assuming that when the automatic driving controller 40b performs control, the agricultural machine 1 is in an "automatic driving mode". In contrast, a description will be given assuming that when the remote driving controller 40c performs control, the agricultural machine 1 is in a "remote driving mode".

When the agricultural machine 1 is in the automatic driving mode or the remote driving mode, the display 70 displays a predetermined image among a plurality of images generated from the data (such as image signals and light receiving signals) sensed by the plurality of sensors 61. The display of the display 70 will be described in detail below using an example in which the display 70 displays an image based on the image signals (data) generated by the imaging devices 65 capturing images of the vicinity of the agricultural machine 1.

The display controller 72a generates a plurality of images based on the data (image signals) received by the second communication device 75 from the first communication device 43. The plurality of images have different ranges for drawing an object according to the sensing direction and the sensing range r of the sensors 61. In the present embodiment, the plurality of images generated by the display controller 72a include a first generated image m1, a second generated image m2, a third generated image m3, a fourth generated image m4, a fifth generated image m5, a sixth generated image m6, a seventh generated image m7, and an eighth generated image m8.

The first generated image m1 is an image obtained by capturing a forward view of the agricultural machine 1 from a front portion thereof. The first generated image m1 is an image based on the image signals (data) generated after image capturing by an imaging device 65 (referred to as a first camera 65a, see FIG. 14) for which the sensing direction (imaging direction) is forward of the agricultural machine 1, and the sensing range (imaging range r) spreads forward of the agricultural machine 1, the imaging device 65 being among the plurality of imaging devices 65, and provided at a front portion of an upper portion of the frame of the cabin 9. Note that as illustrated in FIG. 14, it is preferable that, for example, the imaging range r of the first camera 65a spread forward of the agricultural machine 1, and the first generated image m1 be an image obtained by capturing a similar range to the forward field of view of an operator seated on the operator's seat 10.

The second generated image m2 is an image obtained by capturing a left forward view of the agricultural machine 1 from a left front portion thereof. The second generated image m2 is an image based on the image signals (data) generated after image capturing by an imaging device 65 (referred to as a second camera 65b, see FIG. 14) for which the sensing direction (imaging direction) is left forward of the agricultural machine 1, and the sensing range r spreads left forward of the agricultural machine 1, the imaging device 65 being among the plurality of imaging devices 65, and provided at a left front portion of an upper portion of the frame of the cabin 9. Note that as illustrated in FIG. 14, it is preferable that, for example, the imaging range r of the second camera 65b spread over the ground surface on the left of the front wheel 7F on the left side of the agricultural machine 1. In other words, the second generated image m2 is an image obtained by capturing the ground surface on the left of the front wheel 7F on the left side.

The third generated image m3 is an image obtained by capturing a left lateral view of the agricultural machine 1 from the left side thereof. The third generated image m3 is an image based on the image signals (data) generated after image capturing by an imaging device 65 (referred to as a third camera 65c, see FIG. 14) for which the sensing direction (imaging direction) is lateral leftward of the agricultural machine 1, and the sensing range r spreads lateral leftward of the agricultural machine 1, the imaging device 65 being among the plurality of imaging devices 65, and provided at a left lateral portion of an upper portion of the frame of the cabin 9. Note that as illustrated in FIG. 14, it is preferable that, for example, the imaging range r of the third camera 65c spread over the ground surface on the left of the cabin 9 of the agricultural machine 1. In other words, the third generated image m3 is an image obtained by capturing the ground surface on the left of the cabin 9.

The fourth generated image m4 is an image obtained by capturing a left rear view of the agricultural machine 1 from a left rear portion thereof. The fourth generated image m4 is an image based on the image signals (data) generated after image capturing by an imaging device 65 (referred to as a fourth camera 65d, see FIG. 14) for which the sensing direction (imaging direction) is left rearward of the agricultural machine 1, and the sensing range r spreads left rearward of the agricultural machine 1, the imaging device 65 being among the plurality of imaging devices 65, and provided at a left rear portion of an upper portion of the frame of the cabin 9. Note that as illustrated in FIG. 14, it is preferable that, for example, the imaging range r of the fourth camera 65d spread over the ground surface on the left of the rear wheel 7R on the left side of the agricultural machine 1. In other words, the fourth generated image m4 is an image obtained by capturing the ground surface on the left of the rear wheel 7R on the left side.

The fifth generated image m5 is an image obtained by capturing a rear view of the agricultural machine 1 from a rear portion thereof. The fifth generated image m5 is an image based on the image signals (data) generated after image capturing by an imaging device 65 (referred to as a fifth camera 65e, see FIG. 14) for which the sensing direction (imaging direction) is rearward of the agricultural machine 1, and the sensing range r spreads rearward of the agricultural machine 1, the imaging device 65 being among the plurality of imaging devices 65, and provided at a rear portion of an upper portion of the frame of the cabin 9. Note that as illustrated in FIG. 14, the imaging range r of the fifth camera 65e spreads, for example, rearward of the agricultural machine 1, and the fifth generated image m5 is an image obtained by capturing a range including the coupler 8.

The sixth generated image m6 is an image obtained by capturing a right rear view of the agricultural machine 1 from a right rear portion thereof. The sixth generated image m6 is an image based on the image signals (data) generated after image capturing by an imaging device 65 (referred to as a sixth camera 65f, see FIG. 14) for which the sensing direction (imaging direction) is right rearward of the agricultural machine 1, and the sensing range r spreads right rearward of the agricultural machine 1, the imaging device 65 being among the plurality of imaging devices 65, and provided at a right rear portion of an upper portion of the frame of the cabin 9. Note that as illustrated in FIG. 14, it is preferable that, for example, the imaging range r of the sixth camera 65f spread over the ground surface on the right of the rear wheel 7R on the right side of the agricultural machine 1. In other words, the sixth generated image m6 is an image obtained by capturing the ground surface on the right of the rear wheel 7R on the right side.

The seventh generated image m7 is an image obtained by capturing a right lateral view of the agricultural machine 1 from a right lateral portion thereof. The seventh generated image m7 is an image based on the image signals (data) generated after image capturing by an imaging device 65 (referred to as a seventh camera 65g, see FIG. 14) for which the sensing direction (imaging direction) is lateral rightward of the agricultural machine 1, and the sensing range r spreads lateral rightward of the agricultural machine 1, the imaging device 65 being among the plurality of imaging devices 65, and provided at a right lateral portion of an upper portion of the frame of the cabin 9. Note that as illustrated in FIG. 14, it is preferable that, for example, the imaging range r of the seventh camera 65g spread over the ground surface on the right of the cabin 9 of the agricultural machine 1. In other words, the seventh generated image m7 is an image obtained by capturing the ground surface on the right of the cabin 9.

The eighth generated image m8 is an image obtained by capturing a right forward view of the agricultural machine 1 from a right front portion thereof. The eighth generated image m8 is an image based on the image signals (data) generated after image capturing by an imaging device 65 (referred to as an eighth camera 65h, see FIG. 14) for which the sensing direction (imaging direction) is right forward of the agricultural machine 1, and the sensing range r spreads right forward of the agricultural machine 1, the imaging device 65 being among the plurality of imaging devices 65, and provided at a right front portion of an upper portion of the frame of the cabin 9. Note that as illustrated in FIG. 14, it is preferable that, for example, the imaging range r of the eighth camera 65h spread over the ground surface on the right of the front wheel 7F on the right side of the agricultural machine 1. In other words, the eighth generated image m8 is an image obtained by capturing the ground surface on the right of the front wheel 7F on the right side.

When the agricultural machine 1 is in the automatic driving mode or the remote driving mode, the second communication device 75 receives data sensed by the plurality of sensors 61, and the display controller 72a displays an image, as a first image M1, on the display unit 71, the image (the first generated image m1 or the second generated image m2) being among the plurality of images generated from the data and showing a forward or rearward view of the agricultural machine 1. In the present embodiment, the first image M1 is displayed as a video in which an image is updated at predetermined time intervals. The display controller 72a displays a monitoring screen 100 as a screen showing the first image M1 on the display unit 71.

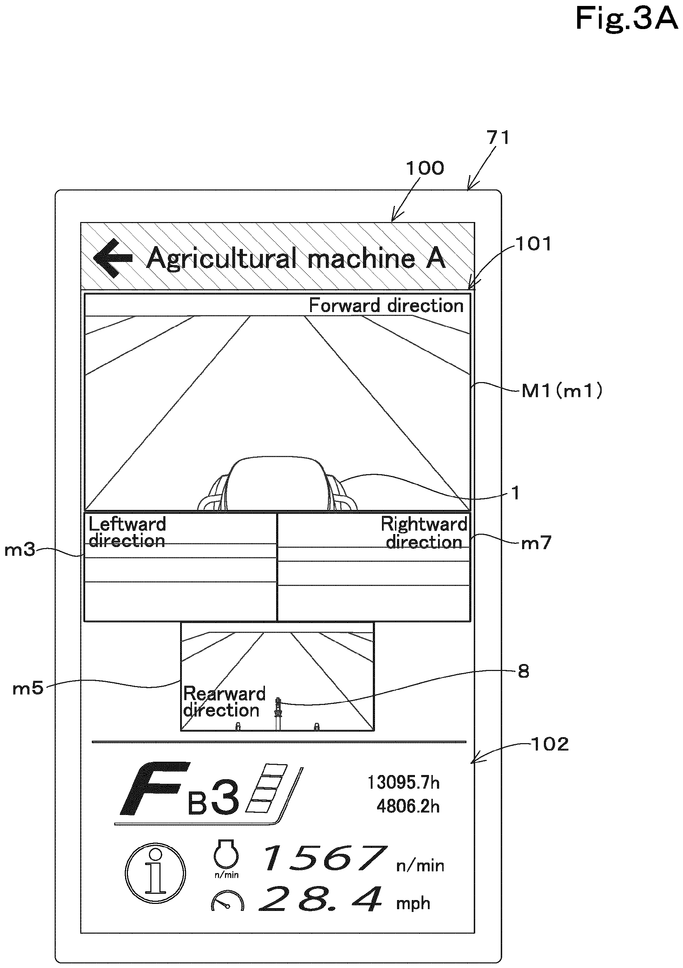

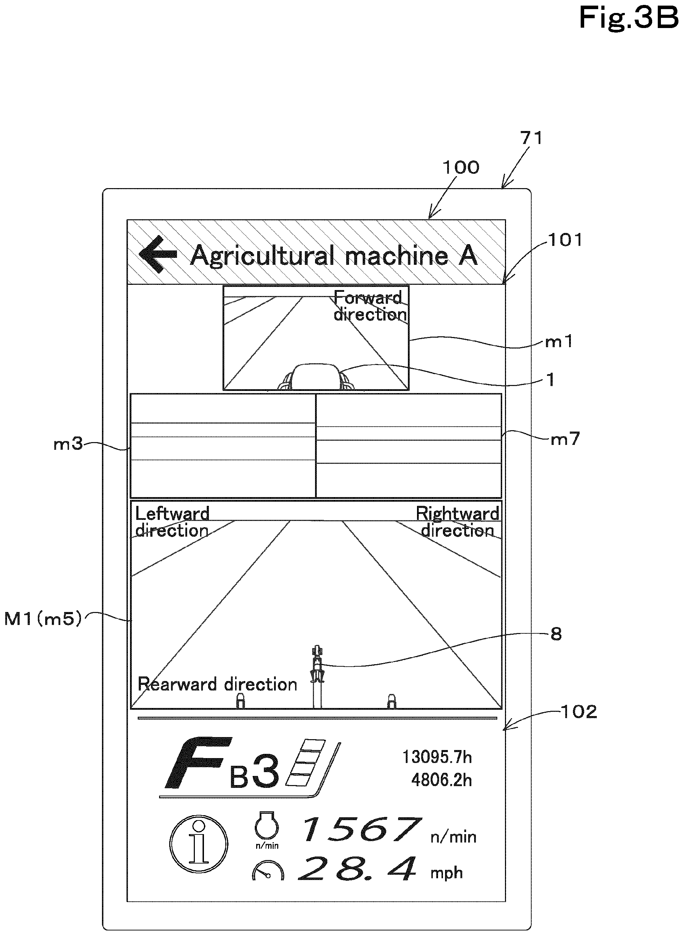

FIG. 3A and FIG. 3B are views illustrating the monitoring screen 100 that displays the first image M1. As illustrated in FIG. 3A and FIG. 3B, the monitoring screen 100 includes a first display region 101 and a second display region 102. The display controller 72a displays an image in the first display region 101 and the second display region 102. The first display region 101 is a region for displaying the first image M1. The first display region 101 is a display region larger than the second display region 102.

The display controller 72a displays an image, as the first image M1, in the first display region 101, the image being among a plurality of images (the first generated image m1 to the eighth generated image m8) and showing a forward or rearward view of the agricultural machine 1. The first image M1 is the most recognizable image in the first display region 101, and is the largest displayed image among the images displayed in the first display region 101 in the present embodiment. The display controller 72a acquires the state of switching (switching of the travelling device 7 to forward or rearward move) of the travelling device 7 by the transmission 5 based on the machine information received by the second communication device 75. The display controller 72a displays, as the first image M1, the image showing the forward or rearward view on the display unit 71, based on the state of switching of the travelling device 7.

In the present embodiment, the second communication device 75 acquires operation signals of the speed change member 17 from the first communication device 43, and the display controller 72a determines the switching state of the travelling device 7 based on the operation signals. When the travelling device 7 is switched to forward move, the display controller 72a displays the first generated image m1 as the first image M1 on the display unit 71. In contrast, when the travelling device 7 is switched to rearward move, the display controller 72a displays the fifth generated image m5 as the first image M1 on the display unit 71.

Note that the display controller 72a may display an image in the first display region 101, the image being among a plurality of images and other than the first image M1. For example, as illustrated in FIG. 3A and FIG. 3B, the display controller 72a displays, in the first display region 101, three images among the first generated image m1, the third generated image m3, the fifth generated image m5, and the seventh generated image m7, the three images being other than the first image M1 and smaller than the first image M1.

The display controller 72a displays the first generated image m1 on the upper side of the first display region 101, and displays the third generated image m3 on the left side of the first display region 101. In addition, the display controller 72a displays the fifth generated image m5 on the lower side of the first display region 101, and displays the seventh generated image m7 on the right side of the first display region 101.

Note that in FIG. 3A and FIG. 3B, the case is illustrated where the display controller 72a displays, in the first display region 101, images (three images which are among the first generated image m1, the third generated image m3, the fifth generated image m5, and the seventh generated image m7, and other than the first image M1) different from the first image M1, and the first image M1 only need be the most recognizable image in the first display region 101. For example, the display controller 72a may be configured to display only the first image M1 in the first display region 101. Alternatively, the display controller 72a may be configured to display the images other than the first image M1 as grayed out, which are to be displayed in the first display region 101.

The second display region 102 is a display region arranged adjacent to the bottom of the first display region 101, and displays, as an image, the machine information received by the second communication device 75. Specifically, as illustrated in FIG. 3A and FIG. 3B, the display controller 72a displays, in the second display region 102, the number of revolutions of the prime mover 4 detected by the prime mover rotation sensor 53, and the traveling speed detected by the speed sensor 57 based on the machine information. The display controller 72a may display the speed stage of the transmission 5 based on the machine information, and the state of a working machine displayed by the display controller 72a in the second display region 102 is not limited to the information illustrated in FIG. 3A and FIG. 3B.

When the agricultural machine 1 is located in the area (agricultural work area) E related to agricultural work, the display 70 displays, as the second image M2, a predetermined image preferentially over the first image M1, the predetermined image being among the plurality of images generated from the data (such as image signals and light receiving signals) sensed by the plurality of sensors 61. In other words, when the agricultural machine 1 is not located in the agricultural work area E, the display 70 does not display the second image M2.

In the present embodiment, the second image M2 is displayed as a video in which an image is updated at predetermined time intervals. Specifically, when the agricultural machine 1 is located in the agricultural work area E, the display 70 displays the second image M2 preferentially over the first image M1 in the first display region 101 of the monitoring screen 100.

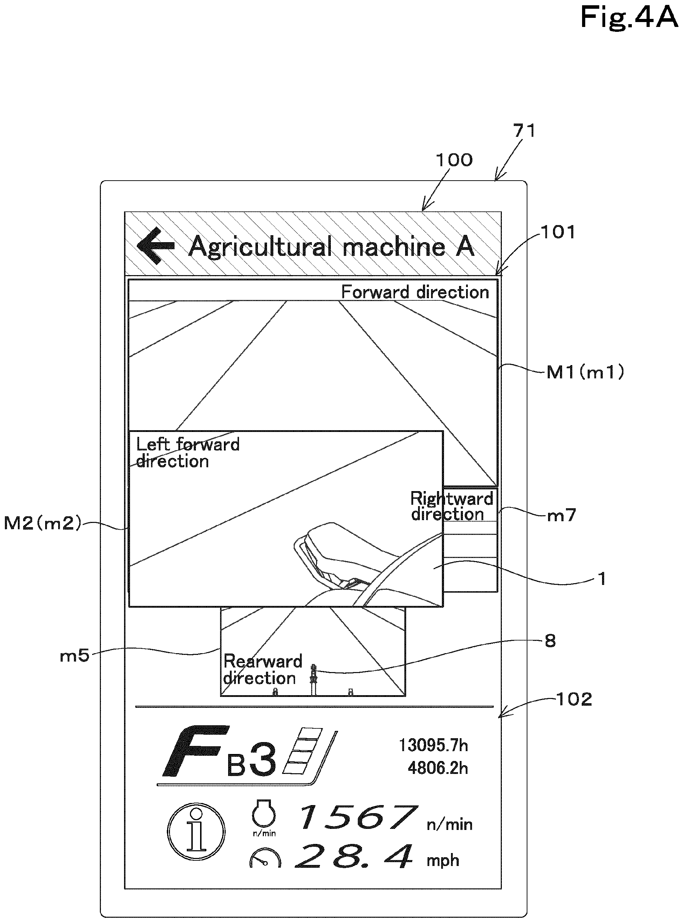

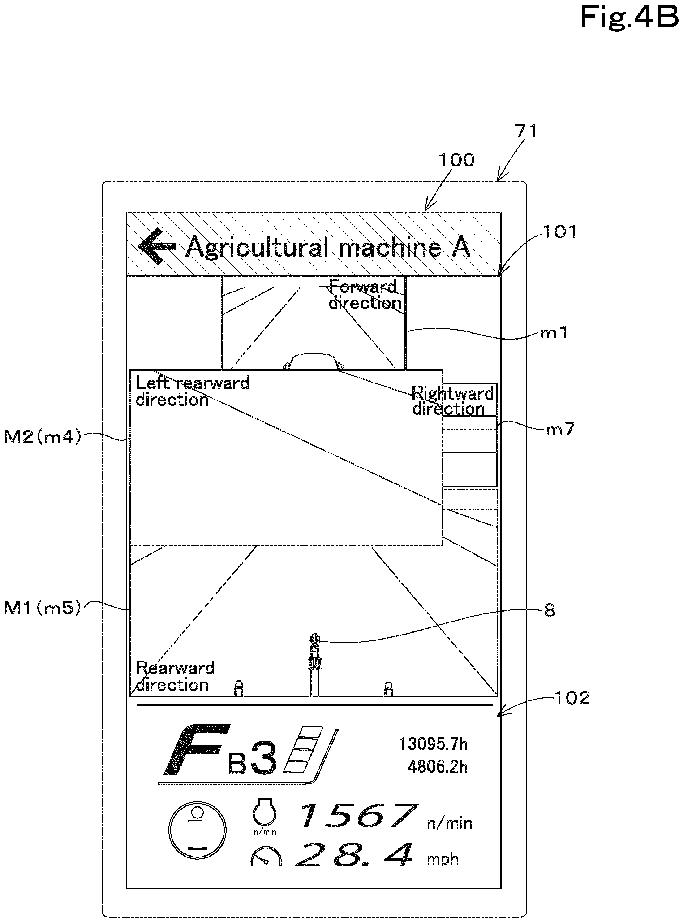

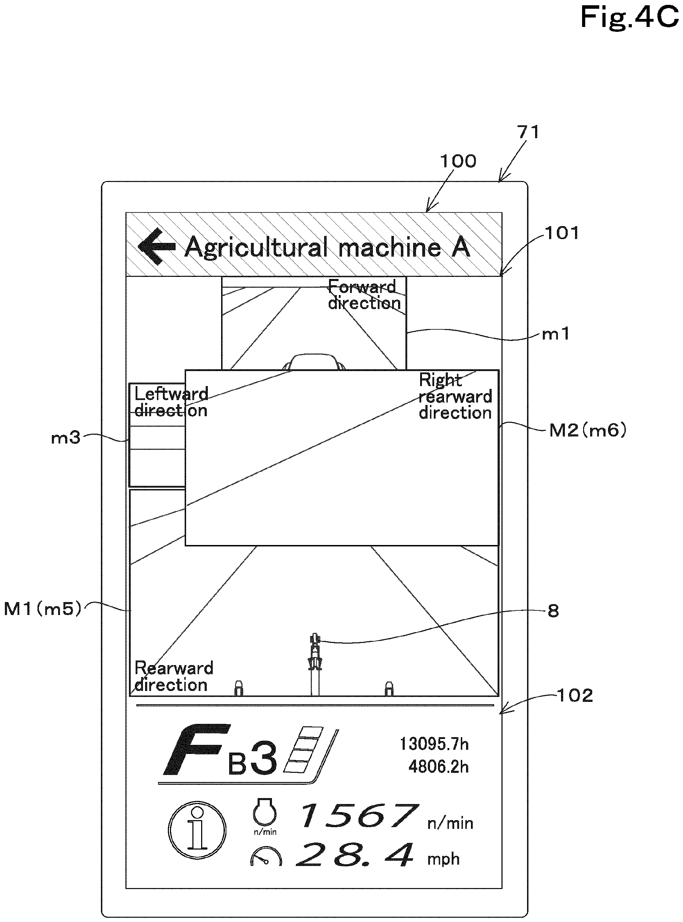

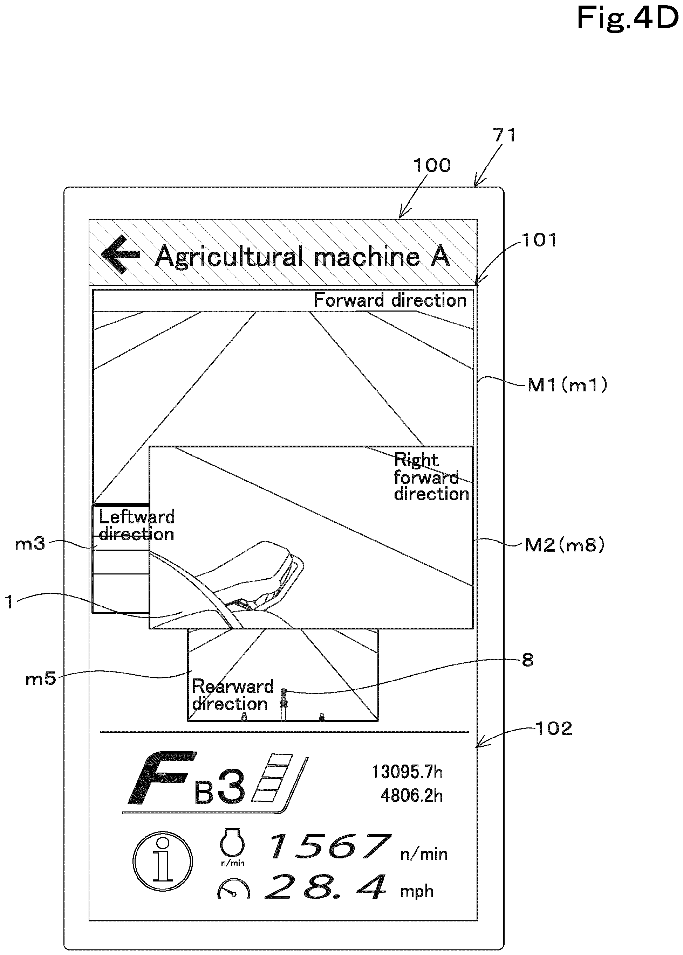

FIG. 4A is a first view showing an example of the monitoring screen 100 that displays the second image M2. FIG. 4B is a second view showing an example of the monitoring screen 100 that displays the second image M2. FIG. 4C is a third view showing an example of the monitoring screen 100 that displays the second image M2. FIG. 4D is a fourth view showing an example of the monitoring screen 100 that displays the second image M2. As illustrated in FIG. 4A, FIG. 4B, FIG. 4C, and FIG. 4D, for example, the display 70 displays the second image M2 superimposed on the first image M1 displayed in the first display region 101 so that the second image M2 is located above the layer on which the first image M1 is displayed, thereby displaying the second image M2 preferentially over the first image M1.

The display 70 may display the second image M2 preferentially over the first image M1, and the display format of the second image M2 is not limited to the above-described display format. For example, when displaying the second image M2, the display 70 may display the first image M1 as grayed out, or may hide the first image M1 in the first display region 101 and display the second image M2.

The display controller 72a may display the second image M2 at a position corresponding to the sensing direction (imaging direction) of the image displayed as the second image M2 in the first display region 101. For example, as illustrated in FIG. 4A, when displaying the second generated image m2 as the second image M2 in the first display region 101, the display controller 72a displays the second generated image m2 on the left side of the first display region 101. At this point, the display controller 72a displays the second generated image m2 overlapping with the first generated image m1 displayed as the first image M1.

As illustrated in FIG. 4B, when displaying the fourth generated image m4 as the second image M2 in the first display region 101, the display controller 72a displays the fourth generated image m4 on the left side of the first display region 101. At this point, the display controller 72a displays the fourth generated image m4 overlapping with the fifth generated image m5 displayed as the first image M1.

As illustrated in FIG. 4C, when displaying the sixth generated image m6 as the second image M2 in the first display region 101, the display controller 72a displays the sixth generated image m6 on the right side of the first display region 101. At this point, the display controller 72a displays the sixth generated image m6 overlapping with the fifth generated image m5 displayed as the first image M1.

As illustrated in FIG. 4D, when displaying the eighth generated image m8 as the second image M2 in the first display region 101, the display controller 72a displays the eighth generated image m8 on the right side of the first display region 101. At this point, the display controller 72a displays the eighth generated image m8 overlapping with the first generated image m1 displayed as the first image M1.

In addition, when displaying the second image M2 in the first display region 101, the display controller 72a may perform animation display which slides in a direction corresponding to the sensing direction (imaging direction) of the image displayed as the second image M2. For example, as illustrated in FIG. 4A, when displaying the second generated image m2 as the second image M2 in the first display region 101, the display controller 72a performs slide display of the second generated image m2 from the upper left direction to the center of the first display region 101.

As illustrated in FIG. 4B, when displaying the fourth generated image m4 as the second image M2 in the first display region 101, the display controller 72a performs slide display of the fourth generated image m4 from the lower left direction to the center of the first display region 101.

As illustrated in FIG. 4C, when displaying the sixth generated image m6 as the second image M2 in the first display region 101, the display controller 72a performs slide display of the sixth generated image m6 from the lower right direction to the center of the first display region 101.

As illustrated in FIG. 4D, when displaying the eighth generated image m8 as the second image M2 in the first display region 101, the display controller 72a performs slide display of the eighth generated image m8 from the upper right direction to the center of the first display region 101.

As illustrated in FIG. 1, the support system S for the agricultural machine 1 includes a determiner 72b. In the present embodiment, the determiner 72b is included in the terminal controller 72, and comprised of the electrical and electronic circuits provided in the terminal controller 72, and the programs stored in CPUs and the like. The determiner 72b determines whether the second image M2 is displayed preferentially over the first image M1, and which of a plurality of images is displayed on the display unit 71 as the second image M2. The determiner 72b also determines whether the agricultural machine 1 is located in the agricultural work area E, based on e.g., the positional information of the agricultural machine 1 received by the second communication device 75 from the first communication device 43.

Here, the agricultural work area E is the region where the agricultural machine 1 is located in a series of operations performed by the agricultural machine 1 in the agricultural work. For example, the agricultural work area E includes: a storage place P where the working device 2 to be coupled to the agricultural machine 1 is stored; a movement path R (such as the farm road Ra or the public road Rb) from the storage place P to the agricultural field G where the agricultural machine 1 performs the agricultural work; a region Ed in the vicinity of the entry/exit D to the agricultural field G; and the agricultural field G. The processes performed by the determiner 72b, the display controller 72a, and the like in each agricultural work area E will be described below.

First, the second image M2 will be described in detail using an example in which the area E related to the agricultural work is the storage place P. The storage place P includes a barn and a garage where the working device 2, the agricultural machine 1, and the like are stored. When the agricultural machine 1 is located in the storage place P (first condition), and the working device 2 is to be coupled to the agricultural machine 1 (second condition), the display 70 displays, as the second image M2, an image that is among the plurality of images and shows the direction of the working device 2. Here, the image showing the direction of the working device 2 is such an image that the working device 2 is included in the sensing range r as seen from the agricultural machine 1.

The determiner 72b determines whether the first condition is satisfied, specifically, whether the agricultural machine 1 is located in the storage place P based on the positional information of the agricultural machine 1 and the positional information of the storage place P. In addition, the determiner 72b determines whether the second condition is satisfied, specifically, whether the working device 2 is to be coupled to the agricultural machine 1 based on the positional information of the agricultural machine 1 and the positional information of the working device 2. For example, when the agricultural machine 1 is located in the storage place P, and the distance between the agricultural machine 1 and the working device 2 is less than or equal to a predetermined first threshold value (e.g., 1.5 m), the determiner 72b determines that the working device 2 is to be coupled to the agricultural machine 1.

The determiner 72b obtains the positional information of the agricultural machine 1 based on the machine information received by the second communication device 75 via the first communication device 43. In addition, the determiner 72b obtains the positional information of the storage place P and the positional information of the working device 2, which have been received by the second communication device 75 from the server 80. The positional information of the storage place P is included in the map information stored in the database 81 of the server 80, and the positional information of the working device 2 is pre-defined in the database 81 by the administrator of the agricultural field G operating a management terminal connected to the server 80.

Even when the positional information of the working device 2 has not been pre-defined in the database 81 by the administrator, when the working device 2 includes a detector that detects the position (positional information) of itself and a transmitter that can transmit the positional information to the server 80 and the second communication device 75, the determiner 72b may obtain the positional information of the working device 2 via the second communication device 75.

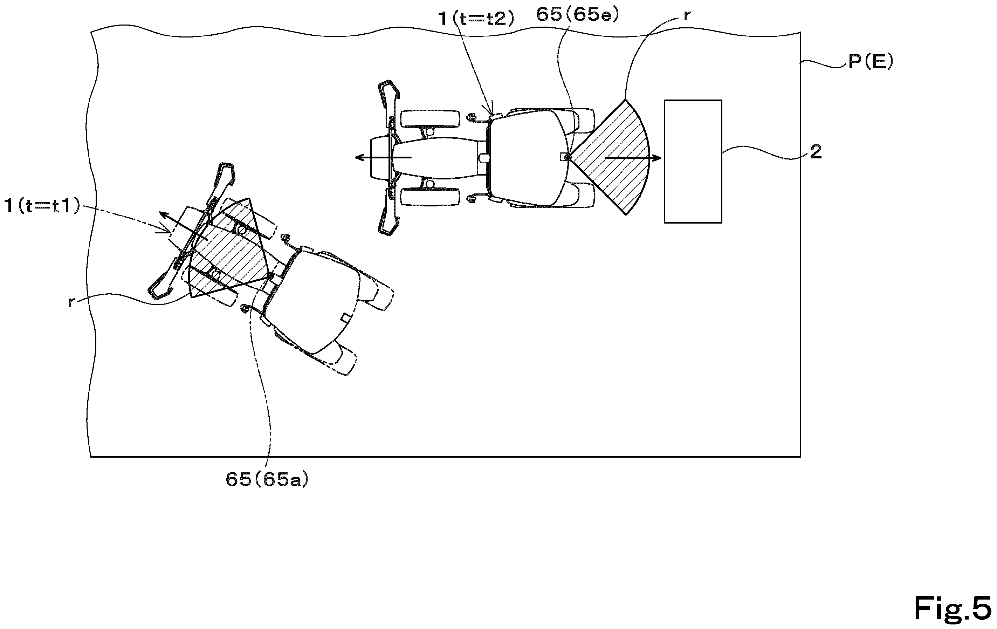

When the determiner 72b determines that the first condition and the second condition are satisfied, the display controller 72a displays, as the second image M2, an image that is among the plurality of images and shows the direction of the working device 2. FIG. 5 is a first view for explaining a state in which the agricultural machine 1 is located in the storage place P, and the sensor 61 corresponding to the second image M2 displayed by the display 70. FIG. 5 illustrates the agricultural machine 1 (hereinafter referred to as the agricultural machine 1 at first time t1) which is located in the storage place P and whose distance to the working device 2 exceeds the first threshold value; and the agricultural machine 1 (hereinafter referred to as the agricultural machine 1 at second time t2) which is located in the storage place P and whose distance to the working device 2 is less than or equal to the first threshold value. In other words, the agricultural machine 1 at the first time t1 satisfies the first condition, but does not satisfy the second condition. In contrast, the agricultural machine 1 at the second time t2 satisfies the first condition and the second condition.

When the determiner 72b determines that the first condition and/or the second condition is not satisfied, the display controller 72a displays the first image M1 in the first display region 101, but does not display the second image M2. In the example illustrated in FIG. 5, in the agricultural machine 1 (the agricultural machine 1 at the first time t1), the transmission 5 has switched the travelling device 7 to forward, and the display controller 72a displays the first generated image m1 captured by the first camera 65a as the first image M1 in the first display region 101.

In contrast, when the determiner 72b determines that the first condition and the second condition are satisfied, the display controller 72a displays the second image M2 in the first display region 101. In other words, when the determiner 72b determines that the first condition and the second condition are satisfied, regardless of the switching state of the travelling device 7, the display 70 displays, as the second image M2, an image that is among the plurality of images and shows the direction of the working device 2.

In the example illustrated in FIG. 5, the working device 2 is located rearward of the agricultural machine 1 at the second time t2, and the display controller 72a displays the fifth generated image m5 captured by the fifth camera 65e as the second image M2 in the first display region 101. In other words, when the distance between the agricultural machine 1 and the working device 2 is less than or equal to the first threshold value, even when the transmission 5 has switched the travelling device 7 to forward in the agricultural machine 1 at the second time t2, the display controller 72a displays, as the second image M2, the fifth generated image m5 captured rearward from a rear portion of the agricultural machine 1.

Note that the image displayed as the second image M2 is not limited to the fifth generated image m5, and when the working device 2 is located left rearward of the agricultural machine 1, the display controller 72a displays the fourth generated image m4 captured by the fourth camera 65d as the second image M2. When the working device 2 is located right rearward of the agricultural machine 1, the display controller 72a displays the sixth generated image m6 captured by the sixth camera 65f as the second image M2.

In the description above, the determiner 72b calculates the distance between the agricultural machine 1 and the working device 2 based on the positional information of the agricultural machine 1 and the positional information of the working device 2; however, the determiner 72b may calculate the distance between the agricultural machine 1 and the working device 2 based on the data sensed by the plurality of sensors 61.

The determination method used by the determiner 72b for the second condition is not limited to the above-described method, and the determiner 72b may determine that the working device 2 is to be coupled to the agricultural machine 1, for example, when the agricultural machine 1 is located in the storage place P, the working device 2 is located rearward of the coupler 8, and the distance between the coupler 8 and the working device 2 is less than or equal to the first threshold value.

When the automatic driving controller 40b can autonomously switch to the mode (coupling mode) in which the working device 2 is coupled to the coupler 8, the determiner 72b may obtain whether the automatic driving controller 40b is in the coupling mode based on the machine information, and determine whether the second condition is satisfied. When the agricultural machine 1 is remotely controlled by the display 70, the determiner 72b may determine whether the second condition is satisfied based on the operation information of the operating member 74.

In the description above, the determiner 72b makes determination for the first condition and the second condition separately; however, when the agricultural machine 1 can be indirectly determined to be located in the storage place P by the determination made by the determiner 72b for the second condition, the determination for the second condition may also be applied to the determination for the first condition, and determination as to whether the first condition is satisfied may be omitted.

Alternatively, the determiner 72b may determine (estimate) whether the second condition is satisfied by using a model (operation determination model) which has learned the types of operations of the agricultural machine 1 in agricultural work and machine information in the operations. In this case, the operation determination model is a learned model that is constructed by inputting thereto information in which a large number of types of operations of the agricultural machine 1 are associated with machine information, and performing deep learning with artificial intelligence (AI).

Furthermore, in the description above, when the agricultural machine 1 is located in the storage place P and the working device 2 is to be coupled to the agricultural machine 1, the display 70 displays, as the second image M2, an image that is among the plurality of images and shows the direction of the working device 2; however, when the agricultural machine 1 is located in the storage place P (the first condition) and the agricultural machine 1 is approaching (third condition) the position (predetermined position) of stored object 110 located in the storage place P, the display 70 may display, as the second image M2, an image that is among the plurality of images and shows the direction to the position (predetermined position) of the stored object 110. Here, the image showing the direction of the stored object 110 is such an image that the stored object 110 is included in the sensing range r as seen from the agricultural machine 1. The stored object 110 includes e.g., other agricultural machines 1 and traveling vehicles (automobiles) stored in the storage place P.

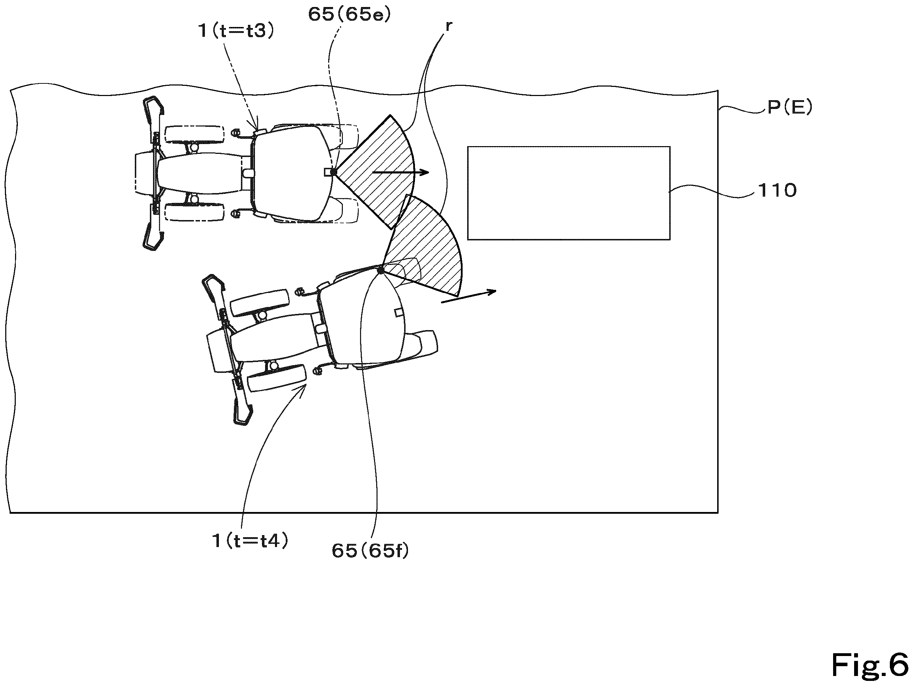

FIG. 6 is a second view for explaining a state in which the agricultural machine 1 is located in the storage place P, and the sensor 61 corresponding to the second image M2 displayed by the display 70. FIG. 6 illustrates the agricultural machine 1 (hereinafter referred to as the agricultural machine 1 at third time t3), and the agricultural machine 1 (hereinafter referred to as the agricultural machine 1 at fourth time t4) which are located in the storage place P and whose distance to the working device 2 is less than or equal to the first threshold value. The stored object 110 is located rearward of the agricultural machine 1 at the third time t3, and located right rearward of the agricultural machine 1 at the fourth time t4. The agricultural machine 1 at the third time t3 and the agricultural machine 1 at the fourth time t4 satisfy the first condition and the third condition.

When the distance between the agricultural machine 1 and the working device 2 is less than or equal to the first threshold value, the determiner 72b determines that the third condition is satisfied, specifically, the agricultural machine 1 is approaching the stored object 110, and the display controller 72a displays the second image M2 in the first display region 101. In other words, when the determiner 72b determines that the first condition and the third condition are satisfied, regardless of the switching state of the travelling device 7, the display 70 displays, as the second image M2, an image that is among the plurality of images and shows the direction of the stored object 110.

In the example illustrated in FIG. 6, since the stored object 110 is located rearward of the agricultural machine 1 at the third time t3, the display controller 72a displays the fifth generated image m5 captured by the fifth camera 65e as the second image M2 in the first display region 101. Since the stored object 110 is located right rearward of the agricultural machine 1 at the fourth time t4, the display controller 72a displays the sixth generated image m6 captured by the sixth camera 65f as the second image M2 in the first display region 101.

Next, the second image M2 will be described in detail using an example in which the area E related to the agricultural work is the movement path R (such as the farm road Ra or the public road Rb) from the storage place P to the agricultural field G. When the agricultural machine 1 is located on the movement path R (fourth condition) and approaching obstacle O on the movement path R (fifth condition), the display 70 displays, as the second image M2, an image that is among the plurality of images and shows the direction of the obstacle O. Here, the image showing the direction of the obstacle O is such an image that the obstacle O is included in the sensing range r as seen from the agricultural machine 1. The obstacle O includes a utility pole and a fence installed in the movement path R.

The determiner 72b determines whether the fourth condition is satisfied, specifically, whether the agricultural machine 1 is located on the movement path R based on the positional information of the agricultural machine 1 and the positional information of the movement path R. In addition, the determiner 72b determines whether the fifth condition is satisfied, specifically, whether the agricultural machine 1 is approaching the obstacle O based on the positional information of the agricultural machine 1 and the positional information of the obstacle O. For example, when the agricultural machine 1 is located on the movement path R, and the distance between the agricultural machine 1 and the obstacle O is less than or equal to a predetermined second threshold value (e.g., 50 cm), the determiner 72b determines that the obstacle O is to be coupled to the agricultural machine 1.

The determiner 72b obtains the positional information of the movement path R and the positional information of the obstacle O from the server 80 via the second communication device 75. The positional information of the movement path R is included in the map information stored in the database 81 of the server 80, and the positional information of the obstacle O is pre-defined in the database 81 by the administrator of the agricultural field G operating a management terminal.

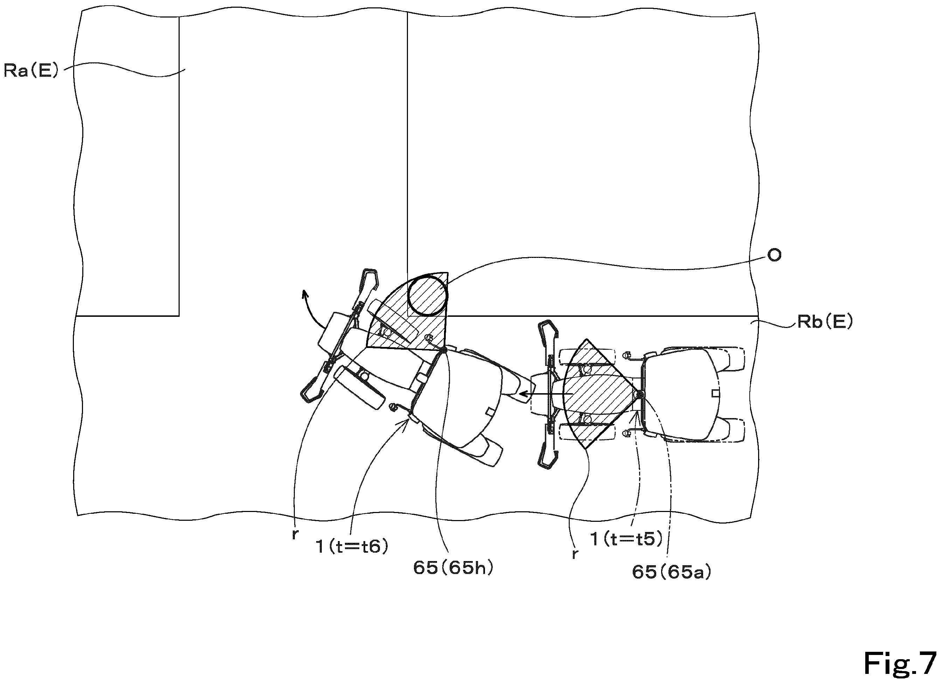

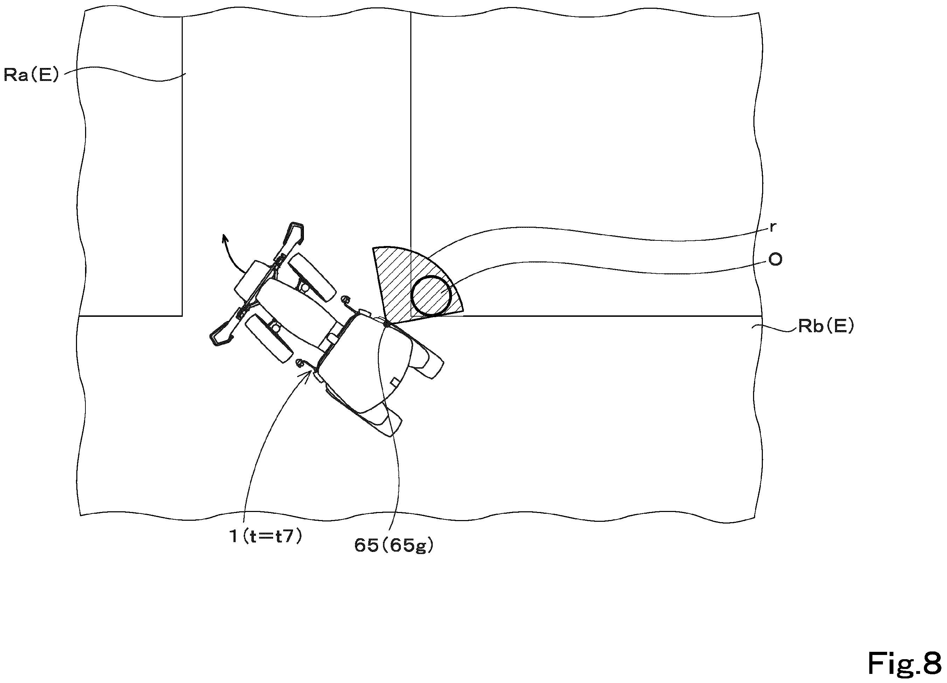

When the determiner 72b determines that the fourth condition and the fifth condition are satisfied, the display controller 72a displays, as the second image M2, an image that is among the plurality of images and shows the direction of the obstacle O. FIG. 7 is a first view for explaining a state in which the agricultural machine 1 is located on the movement path R, and the sensor 61 corresponding to the second image M2 displayed by the display 70. FIG. 8 is a second view for explaining a state in which the agricultural machine 1 is located on the movement path R, and the sensor 61 corresponding to the second image M2 displayed by the display 70.

FIG. 7 and FIG. 8 illustrate the agricultural machine 1 located on the same movement path R at different times. The movement path R illustrated in FIG. 7 and FIG. 8 is a T-shaped intersection, and the farm road Ra is connected to a middle (crossing point) of the public road Rb. The obstacle (utility pole) O is located at the crossing point of the T-shaped intersection. FIG. 7 illustrates the agricultural machine 1 (hereinafter referred to as the agricultural machine 1 at fifth time t5) which is located on the movement path R and whose distance to the obstacle O exceeds the second threshold value, and the agricultural machine 1 (hereinafter referred to as the agricultural machine 1 at sixth time t6) which is located on the movement path R and whose distance to the obstacle O is less than or equal to the second threshold value, and which has moved since the fifth time t5.

FIG. 8 illustrates the agricultural machine 1 (hereinafter referred to as the agricultural machine 1 at seventh time t7) which is located on the movement path R and whose distance to the obstacle O is less than or equal to the second threshold value, and which has further moved since the sixth time t6.

The agricultural machine 1 at the fifth time t5 satisfies the fourth condition, but does not satisfy the fifth condition. The agricultural machine 1 at the sixth time t6 and the agricultural machine 1 at the seventh time t7 satisfy the fourth condition and the fifth condition.

When the determiner 72b determines that the fourth condition and/or the fifth condition is not satisfied, the display controller 72a displays the first image M1 in the first display region 101, but does not display the second image M2. In the example illustrated in FIG. 7, in the agricultural machine 1 (the agricultural machine 1 at the fifth time t5), the transmission 5 has switched the travelling device 7 to forward, and the display controller 72a displays the first generated image m1 captured by the first camera 65a as the first image M1 in the first display region 101.

In contrast, when the determiner 72b determines that the fourth condition and the fifth condition are satisfied, the display controller 72a displays the second image M2 in the first display region 101. In other words, when the determiner 72b determines that the fourth condition and the fifth condition are satisfied, regardless of the switching state of the travelling device 7, the display 70 displays, as the second image M2, an image that is among the plurality of images and shows the direction of the obstacle O. In the example illustrated in FIG. 7, the obstacle O is located right forward of the agricultural machine 1 at the sixth time t6, and the display controller 72a displays the eighth generated image m8 captured by the eighth camera 65h as the second image M2 in the first display region 101.

Note that the image displayed as the second image M2 is not limited to the eighth generated image m8, and when the obstacle O is located lateral rightward of the agricultural machine 1 as at the seventh time t7, the display controller 72a displays the seventh generated image m7 captured by the seventh camera 65g as the second image M2.

In other words, when determiner 72b determines that the fourth condition and the fifth condition are satisfied, while the agricultural machine 1 is running, the display controller 72a displays the second image M2 in the first display region 101 so that the direction of the obstacle O is followed from the agricultural machine 1.

In the description above, the determiner 72b calculates the distance between the agricultural machine 1 and the obstacle O based on the positional information of the agricultural machine 1 and the positional information of the obstacle O; however, the determiner 72b may calculate the distance between the agricultural machine 1 and the obstacle O based on the data sensed by the plurality of sensors 61.

In the description above, the determiner 72b makes determination for the fourth condition and the fifth condition separately; however, when the agricultural machine 1 can be indirectly determined to be located on the movement path R by the determination made by the determiner 72b for the fifth condition, the determination for the fifth condition may also be applied to the determination for the fourth condition, and determination as to whether the fourth condition is satisfied may be omitted.

The determination method used by the determiner 72b for the fifth condition is not limited to the above-described method, and the determiner 72b may determine (estimate) whether the fifth condition is satisfied by using a model (obstacle determination model) which has learned the types of objects located on the movement path R and actual motion of the agricultural machine 1 in the vicinity of the objects. In this case, the obstacle determination model is a learned model that is constructed by inputting thereto information in which a large number of types of objects located on the movement path R are associated with information (detected information) on the actual motion of the agricultural machine 1, and performing deep learning with artificial intelligence (AI).

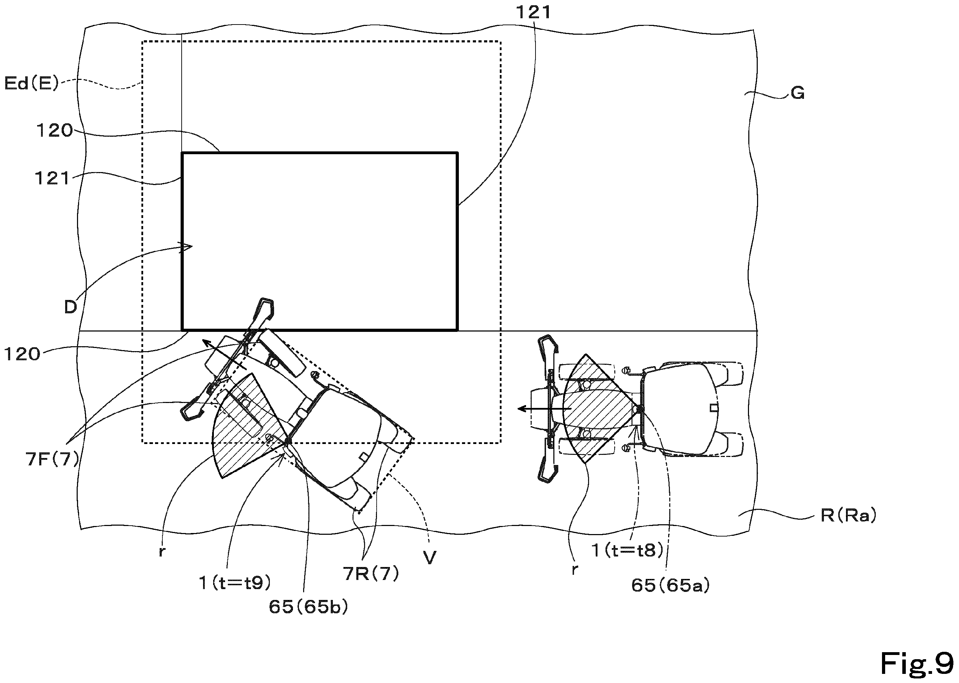

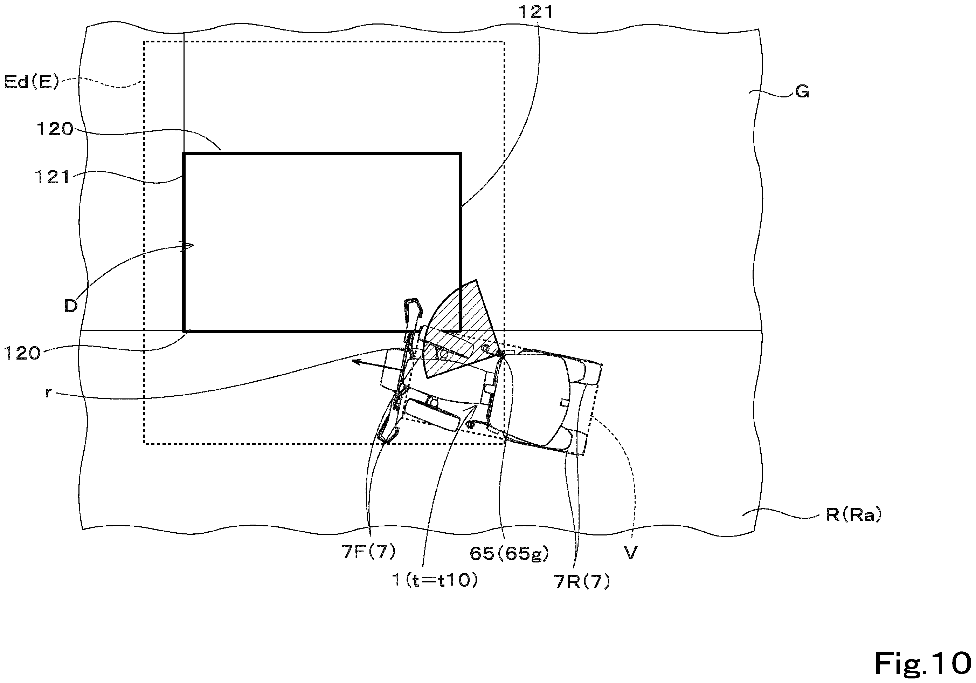

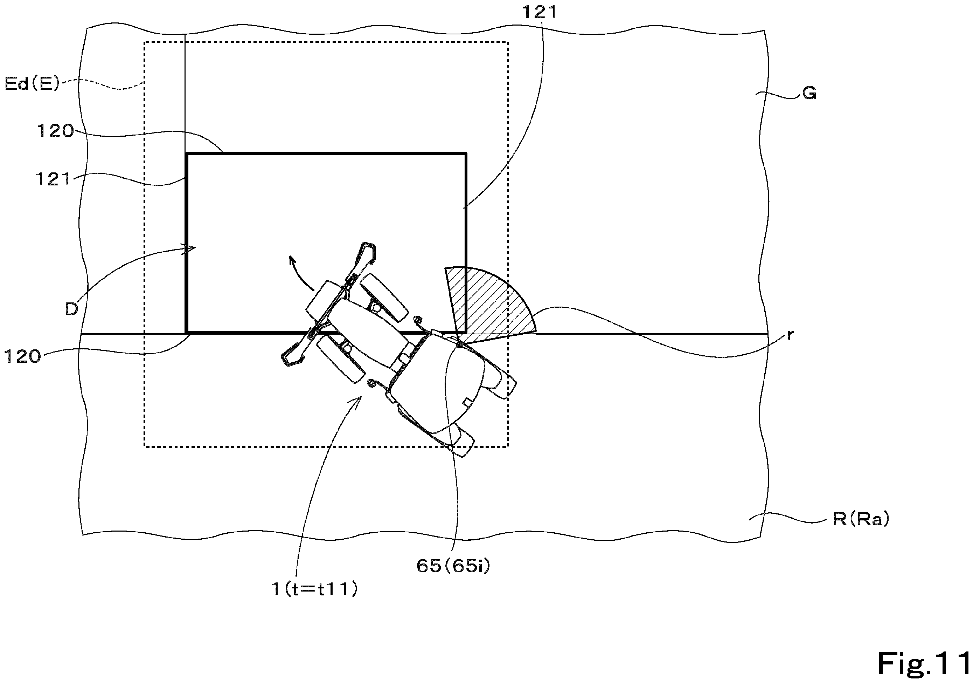

Next, the second image M2 will be described in detail using an example in which the area E related to the agricultural work is the region (entry/exit area) Ed in the vicinity of the entry/exit D to the agricultural field G. In the present embodiment, the entry/exit D is a substantially rectangular region which is a path that allows the movement path R and the agricultural field G to communicate. The entry/exit D is surrounded by a pair of passage portions 120, and a pair of lateral end portions 121. FIG. 9 is a first view for explaining a state in which the agricultural machine 1 is located in the vicinity of the entry/exit D to the agricultural field G, and the sensor 61 corresponding to the second image M2 displayed by the display 70. FIG. 10 is a second view for explaining a state in which the agricultural machine 1 is located in the vicinity of the entry/exit D to the agricultural field G, and the sensor 61 corresponding to the second image M2 displayed by the display 70. FIG. 11 is a third view for explaining a state in which the agricultural machine 1 is located in the vicinity of the entry/exit D to the agricultural field G, and the sensor 61 corresponding to the second image M2 displayed by the display 70. FIG. 9, FIG. 10, and FIG. 11 illustrate the agricultural machine 1 in the same entry/exit area Ed at different times.

As illustrated in FIG. 9, FIG. 10, and FIG. 11, each passage portion 120 is a boundary line between the entry/exit area Ed, and the movement path R or the agricultural field G, the boundary line being a portion passed by the agricultural machine 1 which enters or exits from the agricultural field G through the entry/exit area Ed. Each lateral end portion 121 is a boundary line between the entry/exit area Ed and the agricultural field G, the boundary line being a portion that connects one sides of the pair of passage portions 120 as well as the other sides of the pair of passage portions 120. When the agricultural field G and the movement path R have different heights, the entry/exit area Ed is inclined from one passage portion 120 to the other passage portion 120.

When the agricultural machine 1 is located in the entry/exit area Ed (sixth condition) and approaching the lateral end portions 121 (seventh condition), the display 70 displays, as the second image M2, an image that is among the plurality of images and shows the direction with a shorter distance between the agricultural machine 1 and the entry/exit D. Specifically, the display 70 displays, as the second image M2, an image of one of both lateral end portions 121 of the entry/exit D, the image showing the lateral end portion 121 in a direction with a shorter distance between the agricultural machine 1 and the entry/exit D. Here, the image showing the lateral end portion 121 in a direction with a shorter distance between the agricultural machine 1 and the entry/exit D is such an image that the lateral end portion 121 is included in the sensing range r as seen from the agricultural machine 1.

The determiner 72b determines whether the sixth condition is satisfied, specifically, whether the agricultural machine 1 is located in the entry/exit area Ed, based on the positional information of the agricultural machine 1 and the positional information of the entry/exit area Ed.

The determiner 72b determines whether the seventh condition is satisfied, specifically, whether the agricultural machine 1 is approaching the lateral end portion 121, based on the positional information of the agricultural machine 1 and the positional information of the lateral end portion 121. For example, when the front wheel 7F of the agricultural machine 1 is located in a passage portion 120, and the distance between the agricultural machine 1 and the lateral end portion 121 is less than or equal to a predetermined third threshold value (e.g., 50 cm), the determiner 72b determines that the seventh condition is satisfied.

As illustrated in FIG. 9 and FIG. 10, the determiner 72b determines whether the front wheel 7F of the agricultural machine 1 is located in a passage portion 120 based on the positional relationship between virtual contour V (e.g., a rectangular contour which surrounds the travelling device 7) and the passage portion 120. Specifically, the determiner 72b calculates a rectangular contour V which surrounds the travelling device 7 based on the positional information of the agricultural machine 1 and various parameters stored in the terminal memory 73, thereby determining whether the front wheel 7F of the agricultural machine 1 is located in the passage portion 120. In summary, in the present embodiment, the determiner 72b calculates the distance between the contour V and the working device 2, and determines whether the distance is less than or equal to the first threshold value.

In addition, the determiner 72b calculates the distance between the contour V and the lateral end portion 121, and determines whether the distance is less than or equal to the third threshold value.

The determiner 72b obtains the positional information of the entry/exit area Ed and the positional information of the contour (the passage portions 120 and the lateral end portions 121) of the entry/exit D, which have been received by the second communication device 75 from the server 80. The positional information of the entry/exit area Ed and the positional information of the contour of the entry/exit D are included in the map information (agricultural field information) stored in the database 81 of the server 80. Note that the positional information of the entry/exit area Ed and the positional information of the contour of the entry/exit D may be pre-defined in the database 81 by the administrator of the agricultural field G operating a management terminal.

When the determiner 72b determines that the sixth condition and the seventh condition are satisfied, the display controller 72a displays, as the second image M2, an image that is among the plurality of images and shows the direction of the lateral end portion 121. The second image M2 will be described in detail below at respective times using FIG. 9, FIG. 10, and FIG. 11.

FIG. 9 illustrates the agricultural machine 1 (hereinafter referred to as the agricultural machine 1 at eighth time t8) in which the front wheel 7F is not located at any passage portion 120 and the distance to the lateral end portions 121 exceeds the third threshold value, and the agricultural machine 1 (hereinafter referred to as the agricultural machine 1 at ninth time t9) in which the front wheel 7F is located at the passage portion 120 and the distance to the lateral end portion 121 on one side (the left side in FIG. 9) of the entry/exit D is less than or equal to the predetermined third threshold value.

FIG. 10 illustrates the agricultural machine 1 (hereinafter referred to as the agricultural machine 1 at 10th time t10) in which the front wheel 7F is located at the passage portion 120 and the distance to the lateral end portion 121 (the right side in FIG. 10) on the other side of the entry/exit D is less than or equal to the predetermined third threshold value. FIG. 11 illustrates the agricultural machine 1 (hereinafter referred to as the agricultural machine 1 at 11th time t11) which has further moved since the 10th time t10 and is located in the entry/exit D.

The agricultural machine 1 at the eighth time t8 satisfies the sixth condition, but does not satisfy the seventh condition. The agricultural machine 1 at the ninth time t9, the agricultural machine 1 at the 10th time t10, and the agricultural machine 1 at the 11th time t11 satisfy the sixth condition and the seventh condition.

When the determiner 72b determines that the sixth condition and/or the seventh condition is not satisfied, the display controller 72a displays the first image M1 in the first display region 101, but does not display the second image M2. Note that in the example illustrated in FIG. 9, in the agricultural machine 1 (the agricultural machine 1 at the eighth time t8), the transmission 5 has switched the travelling device 7 to forward, and the display controller 72a displays the first generated image m1 captured by the first camera 65a as the first image M1 in the first display region 101.

In contrast, when the determiner 72b determines that the sixth condition and the seventh condition are satisfied, the display controller 72a displays the second image M2 in the first display region 101. In the example illustrated in FIG. 9, when the lateral end portion 121 (the lateral end portion 121 on one side) is located left forward of the agricultural machine 1 and the distance between the agricultural machine 1 and the lateral end portion 121 on one side is less than or equal to the third threshold value as at the ninth time t9, the display controller 72a displays the second generated image m2 captured by the second camera 65b as the second image M2 in the first display region 101.

Note that the image displayed as the second image M2 is not limited to the second generated image m2, and when the lateral end portion 121 (the lateral end portion 121 on the other side) is located right forward of the agricultural machine 1 and the distance between the agricultural machine 1 and the lateral end portion 121 on the other side is less than or equal to the third threshold value as at the 10th time t10, the display controller 72a displays the eighth generated image m8 captured by the eighth camera 65h as the second image M2 in the first display region 101.

When the lateral end portion 121 (the lateral end portion 121 on the other side) is located lateral rightward of the agricultural machine 1 and the distance between the agricultural machine 1 and the lateral end portion 121 on the other side is less than or equal to the third threshold value as at the 11th time t11, the display controller 72a displays the seventh generated image m7 captured by the seventh camera 65g as the second image M2 in the first display region 101.

In other words, when the determiner 72b determines that the sixth condition and the seventh condition are satisfied, while the agricultural machine 1 is running, the display controller 72a displays the second image M2 in the first display region 101 so that the direction of the lateral end portion 121 closer to the agricultural machine 1 is followed.

In the description above, the determiner 72b calculates the distance between the agricultural machine 1 and the lateral end portion 121 based on the positional information of the agricultural machine 1 and the positional information of the lateral end portion 121; however, the determiner 72b may calculate the distance between the agricultural machine 1 and the lateral end portion 121 based on the data sensed by the plurality of sensors 61.

In the description above, the determiner 72b makes determination for the sixth condition and the seventh condition separately; however, when the agricultural machine 1 can be indirectly determined to be located in the entry/exit area Ed by the determination made by the determiner 72b for the seventh condition, the determination for the seventh condition may also be applied to the determination for the sixth condition, and determination as to whether the sixth condition is satisfied may be omitted.

The determiner 72b may determine (estimate) whether the seventh condition is satisfied by using a model (entry/exit determination model) which has learned the types of objects in the vicinity of the agricultural field G, the objects including the entry/exit D to the agricultural field G, and the images of objects in the vicinity of the agricultural field G. In this case, the entry/exit determination model is a learned model that is constructed by inputting thereto information in which a large number of types of objects in the vicinity of the agricultural field G are associated with information (detected information) on the images of objects in the vicinity of the agricultural field G, and performing deep learning with artificial intelligence (AI).

The second image M2 will be described in detail below using an example in which the area E related to the agricultural work is a work site where work is performed by the working device 2. When the agricultural machine 1 is located in the work site (eighth condition) and the traveling speed of the agricultural machine 1 is less than a predetermined speed (ninth condition), the display 70 displays, as the second image M2, an image that is among the plurality of images and shows the direction of the working device 2.

The determiner 72b determines whether the eighth condition is satisfied, specifically, whether the agricultural machine 1 is located in the work site, based on the positional information of the agricultural machine 1 and the positional information of the work site.

In the present embodiment, the determiner 72b determines whether the agricultural machine 1 is performing work (low-speed work) while running at a low speed in the work site (agricultural field G), and in this case, the display controller 72a displays, as the second image M2, an image that is among the plurality of images and shows the direction of the working device 2. The determiner 72b obtains the traveling speed of the agricultural machine 1 based on the machine information received by the second communication device 75, and when the traveling speed falls below a predetermined fourth threshold value (e.g., 5 km/h), the determiner 72b determines that the ninth condition is satisfied because the traveling speed is less than a predetermined speed.

The determiner 72b obtains the positional information of the agricultural field G from the server 80 via the second communication device 75. The positional information of the agricultural field G is included in the map information (agricultural field information) stored in the database 81 of the server 80.

In the description above, the determiner 72b obtains the traveling speed of the agricultural machine 1 based on the machine information; however, the determiner 72b may calculate and obtain the traveling speed of the agricultural machine 1 based on the movement speed per predetermined time in the positional information of the agricultural machine 1.

When the determiner 72b determines that the eighth condition and the ninth condition are satisfied, the display controller 72a displays, as the second image M2, an image that is among the plurality of images and shows the direction of the working device 2. In the present embodiment, the coupler 8 is provided at a rear portion of the traveling vehicle body 3, and the working device 2 is coupled to the rear of the traveling vehicle body 3 (agricultural machine 1), thus, the display controller 72a displays the fifth generated image m5 captured by the fifth camera 65e as the second image M2 in the first display region 101.

Note that the image displayed as the second image M2 is not limited to the fifth generated image m5, and when the coupler 8 is provided at a front portion of the traveling vehicle body 3 and the working device 2 is coupled forward of the traveling vehicle body 3 (agricultural machine 1), the display controller 72a displays the first generated image m1 captured by the first camera 65a as the second image M2. Based on the machine information, the display controller 72a obtains, from the controller 40, information indicating the position of the traveling vehicle body 3, to which the working device 2 is coupled.

When the working device 2 is coupled to the traveling vehicle body 3 with an offset in the width direction, the display controller 72a may display an image showing the direction of the working device 2 as the second image M2. For example, when the working device 2 is coupled to the rear of the traveling vehicle body 3 and the coupling has an offset to the right relative to the traveling vehicle body 3, the display controller 72a displays the sixth generated image m6 captured by the sixth camera 65f as the second image M2.

In other words, when the widthwise position of the working device 2 relative to the traveling vehicle body 3 is changed during low-speed work of the agricultural machine 1, the display controller 72a displays the second image M2 in the first display region 101 so that the direction of the working device 2 is followed from the agricultural machine 1.

In the embodiment described above, when the agricultural machine 1 performs low-speed work in the agricultural field G, the display controller 72a displays, as the second image M2, an image that is among the plurality of images and shows the direction of the working device 2; however, when the agricultural machine 1 does stationary work without running such as separation work other than the low-speed work, the display controller 72a may display, as the second image M2, an image that is among the plurality of images and shows the direction of the working device 2. In this case, the work site is, for example, a barn where the agricultural machine 1 is installed, and the fourth threshold value is zero.

In the embodiment described above, description has been given using an example in which the display device 70 is an external terminal; however, the display 70 may be a device that displays the first image M1 according to the switching state of the travelling device 7 and displays the second image M2 preferentially over the first image M1 when the agricultural machine 1 is located in the agricultural work area E, and thus the display 70 is not limited to an external terminal. For example, the display 70 may be a display terminal that is provided in the vicinity of the operator's seat 10 to display information on the agricultural machine 1. In this case, the display terminal is placed within the field of view of an operator seated on the operator's seat 10.

It is sufficient that the display 70 be able to display the machine information as an image, and the images (such as the first image M1 and the second image M2) to be displayed on the display unit 71 may be generated by the external server 80 or the controller 40. In this case, the second communication device 75 receives the data (screen data) for a screen, displayed on the display unit 71, and the display controller 72a displays machine information as an image on the display unit 71 based on the screen data. In other words, part of the processing of the display controller 72a, and the processing of the determiner 72b in the above-described embodiment may be performed by the server 80 or the like.

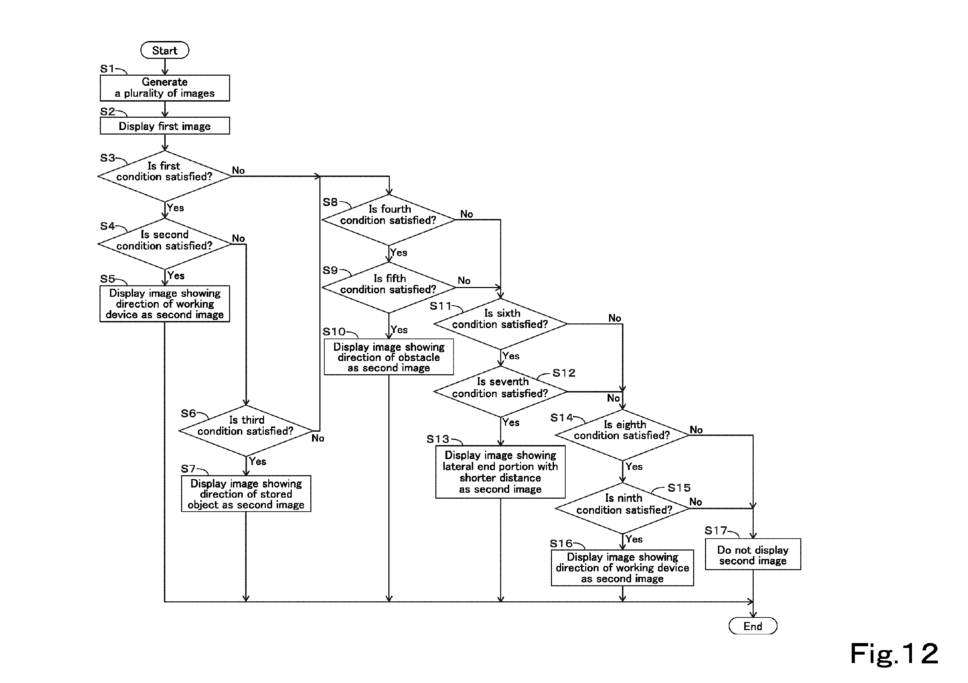

FIG. 12 is a view for explaining a series of flow related to display of the second image M2 by the display 70. The processing of the display controller 72a and the determiner 72b will be briefly described below using FIG. 12. First, the display controller 72a generates a plurality of images based on the data (image signals) received by the second communication device 75 from the first communication device 43 (S1). The display controller 72a displays an image, as the first image M1, based on the machine information received by the second communication device 75, the image being among the plurality of images and showing a forward or rearward view of the agricultural machine 1 (S2).

The determiner 72b determines whether the first condition is satisfied (S3), and upon determination that the first condition is satisfied (S3, Yes), determines whether the second condition is satisfied (S4). When the determiner 72b determines that the second condition is satisfied (S4, Yes), the display controller 72a displays an image preferentially over the first image M1 as the second image M2, the image being among the plurality of images and showing the direction of the working device 2 (S5).

Meanwhile, upon determination that the second condition is not satisfied (S4, No), the determiner 72b determines whether the third condition is satisfied (S6). When the determiner 72b determines that the third condition is satisfied (S6, Yes), the display controller 72a displays an image preferentially over the first image M1 as the second image M2, the image being among the plurality of images and showing the direction of the stored object 110 (S7).

Upon determination that the first condition or the third condition is not satisfied (S3, No, or S6, No), the determiner 72b determines whether the fourth condition is satisfied (S8). Upon determination that the fourth condition is satisfied (S8, Yes), the determiner 72b determines whether the fifth condition is satisfied (S9). When the determiner 72b determines that the fifth condition is satisfied (S9, Yes), the display controller 72a displays an image preferentially over the first image M1 as the second image M2, the image being among the plurality of images and showing the direction of the obstacle O (S10).

Upon determination that the fourth condition or the fifth condition is not satisfied (S8, No, or S9, No), the determiner 72b determines whether the sixth condition is satisfied (S11). Upon determination that the sixth condition is satisfied (S11, Yes), the determiner 72b determines whether the seventh condition is satisfied (S12). When the determiner 72b determines that the seventh condition is satisfied (S12, Yes), the display controller 72a displays an image preferentially over the first image M1 as the second image M2, the image showing the lateral end portion 121 in the direction with a shorter distance between the agricultural machine 1 and the entry/exit D (S13).

Upon determination that the sixth condition or the seventh condition is not satisfied (S11, No, or S12, No), the determiner 72b determines whether the eighth condition is satisfied (S14). Upon determination that the eighth condition is satisfied (S14, Yes), the determiner 72b determines whether the ninth condition is satisfied (S15). When the determiner 72b determines that the ninth condition is satisfied (S15, Yes), the display controller 72a displays an image preferentially over the first image M1 as the second image M2, the image being among the plurality of images and showing the direction of the working device 2 (S16).

When the determiner 72b determines that the eighth condition or the ninth condition is not satisfied (S14, No, or S15, No), the display controller 72a does not display the second image M2 (S17).

The above-described support system S for the agricultural machine 1 includes: the plurality of sensors 61 to sense the vicinity of the agricultural machine 1; and the display 70 to display, as the first image M1, an image that is among a plurality of images generated from the data sensed by the plurality of sensors 61 and that shows a forward or rearward view of the agricultural machine 1. When the agricultural machine 1 is located in the area E related to agricultural work, the display 70 displays a predetermined image among the plurality of images as the second image M2 preferentially over the first image M1.

With the configuration described above, an operator can check not only the image showing a forward or rearward view of the agricultural machine 1 by the images displayed on the display 70, but also can check an appropriate image according to the area E in which the agricultural machine 1 is located. Thus, the operator can easily monitor the agricultural machine 1 without going around the agricultural machine 1 to actually monitor the agricultural machine 1 by eyes.

The area E is the region Ed in the vicinity of the entry/exit D to the agricultural field G, and when the agricultural machine 1 is located in the vicinity of the entry/exit D, the display 70 displays, as the second image M2, an image that is among the plurality of images and that shows the direction with a shorter distance between the agricultural machine 1 and the entry/exit D.

With the configuration described above, even when the surrounding environment is restricted as in the entry/exit D to the agricultural field G and it is difficult for the agricultural machine 1 to enter or exit therefrom, an operator can grasp the state of the agricultural machine 1 without going around the agricultural machine 1 to actually monitor the agricultural machine 1 by eyes.

The area E is the storage place P for the working device 2, and when the agricultural machine 1 is located in the storage place P and the working device 2 is to be coupled to the agricultural machine 1, the display 70 displays, as the second image M2, an image that is among the plurality of images and that shows the direction of the working device 2.

With the configuration described above, when the working device 2 is to be coupled to the agricultural machine 1, an operator can easily check the periphery of the working device 2. Thus, the efficiency of coupling work of the working device 2 can be improved.

The area E is a work site where the working device 2 coupled to the agricultural machine 1 performs work, and when the agricultural machine 1 is located in the work site and the traveling speed of the agricultural machine 1 is less than a predetermined speed, the display 70 displays, as the second image M2, an image that is among the plurality of images and that shows the direction of the working device 2.

With the configuration described above, when the agricultural machine 1 is doing work while running at a relatively low speed, or is doing stationary work, an operator can monitor the working state of the working device 2.

When the agricultural machine 1 is located in the area E and approaching a predetermined position in the area E, the display 70 displays, as the second image M2, an image that is among the plurality of images and that shows the direction of the predetermined position.

With the configuration described above, an operator can check not only the image forward or rearward of the agricultural machine 1 by the images displayed on the display 70, but also can easily grasp the positional relationship with a predetermined position when the agricultural machine 1 is approaching the predetermined position.

The plurality of sensors 61 are provided in the agricultural machine 1 to perform sensing in different directions from the agricultural machine 1.

With the configuration described above, an operator can reliably grasp the distance between the agricultural machine 1 and the vicinity of the agricultural machine 1.

The support system S for the agricultural machine 1 includes the controller 40 to automatically drive the agricultural machine 1. The display 70 includes the operating member 74 that is connected to the controller 40 and that controls the agricultural machine 1 remotely via the controller 40.

With the configuration described above, when the agricultural machine 1 automatically drives, the agricultural machine 1 can be monitored more appropriately.

The display 70 is provided in the vicinity of the operator's seat 10 of the agricultural machine 1.

With the configuration described above, when boarding the agricultural machine 1 to perform work, an operator can monitor the agricultural machine 1 more appropriately.

Although the present invention has been described so far, the embodiments disclosed this time are considered to be illustrative in all respects, and not restrictive. The scope of the present invention is indicated not by the above description, but by the claims, and all modifications within the meaning and scope equivalent to the claims are intended to be embraced therein.

### Reference Signs List

- 1: agricultural machine
- 2: working device
- 10: operator's seat
- 40: controller
- 61: sensor
- 70: display

- 74: operating member
- D: entry/exit
- E: area
- Ed: region
- G: agricultural field
- M1: first image
- M2: second image
- P: storage place
- S: support system

## Claims

1. A support system for an agricultural machine, comprising:
a plurality of sensors to sense a vicinity of an agricultural machine; and
a display to display, as a first image, an image that is among a plurality of images generated from data sensed by the plurality of sensors and that shows a forward or rearward view of the agricultural machine, wherein
when the agricultural machine is located in an area related to agricultural work, the display displays a predetermined image among the plurality of images as a second image preferentially over the first image.

2. The support system for an agricultural machine according to claim 1, wherein
the area is a region in a vicinity of an entry/exit to an agricultural field, and
when the agricultural machine is located in the vicinity of the entry/exit, the display displays, as the second image, an image that is among the plurality of images and that shows a direction with a shorter distance between the agricultural machine and the entry/exit.

3. The support system for an agricultural machine according to claim 1, wherein
the area is a storage place for a working device, and
when the agricultural machine is located in the storage place and the working device is to be coupled to the agricultural machine, the display displays, as the second image, an image that is among the plurality of images and that shows a direction of the working device.

4. The support system for an agricultural machine according to claim 1, wherein
the area is a work site where a working device coupled to the agricultural machine performs work, and
when the agricultural machine is located in the work site and a travelling speed of the agricultural machine is less than a predetermined speed, the display displays, as the second image, an image that is among the plurality of images and that shows a direction of the working device.

5. The support system for an agricultural machine according to claim 1, wherein
when the agricultural machine is located in the area and approaching a predetermined position in the area, the display displays, as the second image, an image that is among the plurality of images and that shows a direction of the predetermined position.

6. The support system for an agricultural machine according to claim 1, wherein
the plurality of sensors are provided in the agricultural machine to perform sensing in different directions from the agricultural machine.

7. The support system for an agricultural machine according to any one of claims 1 to 6, further comprising
a controller to automatically drive the agricultural machine, wherein
the display includes an operating member that is connected to the controller and that controls the agricultural machine remotely via the controller.

8. The support system for an agricultural machine according to any one of claims 1 to 6, wherein
the display is provided in a vicinity of an operator's seat of the agricultural machine.
